# EUROPEAN PATENT SPECIFICATION

(11) **EP 3 354 487 B1**
(45) Date of publication and mention of the grant of the patent: **13.07.2022**
(21) Application number: 16855439.2
(22) Date of filing: 12.10.2016
(51) Int. Cl.: B60C 15/06, B60C 9/00, B60C 15/00

(54) **PNEUMATIC TIRE**
LUFTREIFEN
PNEU

(30) Priority: 15.10.2015 JP 2015203648
(43) Date of publication of application: 01.08.2018
(73) Proprietor: Sumitomo Rubber Industries, Ltd., Kobe-shi, Hyogo 651-0072 (JP)
(72) Inventor: MATSUURA, Koji, Kobe-shi Hyogo 651-0072 (JP)
(74) Representative: Manitz Finsterwald Patent- und Rechtsanwaltspartnerschaft mbB
(86) International application number: PCT/JP2016/080281
(87) International publication number: WO 2017/065186

(56) References cited:
- FR-A1- 2 877 610
- JP-A- H07 156 620
- JP-A- S61 253 205
- JP-A- 2002 137 608
- JP-A- 2010 143 285
- JP-A- 2010 143 286
- JP-A- 2012 250 620
- JP-A- 2012 250 620

## Description

### TECHNICAL FIELD

The present invention relates to pneumatic tires. More particularly, the present invention relates to pneumatic tires for vehicles that run on circuits.

### BACKGROUND ART

On circuits, when a vehicle enters a corner, the vehicle is decelerated. After exiting the corner, the vehicle is accelerated. For the cornering, quick cornering and outstanding acceleration are required. It is considered that, in order to achieve quick cornering and outstanding acceleration, a tire needs to have a high stiffness in its lateral direction, and needs to be flexible in its rotational direction. Tires with improved steering stability and/or simultaneously reduced weight are disclosed in JP H07 156620 A and FR 2 877 610 A1.

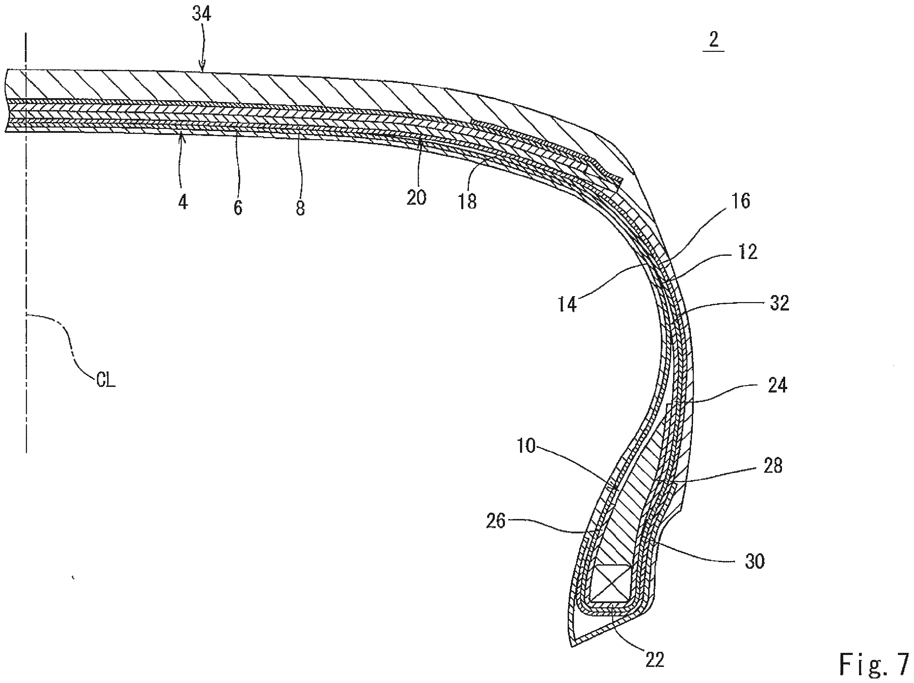

FIG. 7 shows a part of a conventional pneumatic tire 2. In the tire 2, a carcass 4 includes a first ply 6 and a second ply 8. The first ply 6 is turned up around a bead 10 from the axially inner side toward the axially outer side. The second ply 8 is turned up around the bead 10 from the axially outer side toward the axially inner side.

A turned-up portion 12 of the first ply 6 is disposed between a main portion 14 of the first ply 6 and a main portion 16 of the second ply 8. An end 18 of the turned-up portion 12 reaches a portion immediately below a belt 20. The turned-up portion 12 overlaps the belt 20. The structure of this carcass 4 is also called an envelope structure. The carcass 4 contributes to the stiffness in the lateral direction.

The first ply 6 and the second ply 8 each include multiple carcass cords aligned with each other. An angle of the carcass cords relative to the equator plane exerts an influence on the flexibility in the rotational direction.

In the tire 2, a first filler 22 and a second filler 24 are provided between the bead 10 and the carcass 4. The first filler 22 is turned up around the bead 10 from the axially inner side toward the axially outer side. By the turning-up, the first filler 22 has an inner portion 26 and an outer portion 28 formed therein. The second filler 24 is not turned up around the bead 10. An inner end 30 of the second filler 24 is disposed between the outer portion 28 of the first filler 22 and the turned-up portion 12 of the first ply 6. An outer end 32 of the second filler 24 is disposed between the main portion 14 and the turned-up portion 12 of the first ply 6. The second filler 24 extends almost in the radial direction from the inner end 30 toward the outer end 32. The first filler 22 and the second filler 24 contribute to the stiffness in the lateral direction.

Various studies have been conducted on the structure of the carcass, the angle of the carcass cords, the filler, etc., from the viewpoint of quick cornering and outstanding acceleration. An example of the study is disclosed in JP2011-025823.

### CITATION LIST

### PATENT LITERATURE

Patent Literature 1: JP2011-025823

### SUMMARY OF THE INVENTION

### PROBLEMS TO BE SOLVED BY THE INVENTION

The stiffness in the lateral direction is enhanced by using the carcass 4 having the envelope structure. The carcass 4 contributes to the stiffness of the entire tire 2. Therefore, the stiffness is enhanced not only in the lateral direction, but also in the rotational direction. The use of the carcass 4 is likely to impair the flexibility in the rotational direction.

As described above, the angle of the carcass cords relative to the equator plane exerts an influence on the flexibility in the rotational direction. Therefore, by adjusting the angle of the carcass cords, the flexibility may be enhanced. However, the carcass 4 having the envelope structure may exert a significant influence on the stiffness of the tire 2, and therefore, the angle adjustment may not be effective in enhancing the flexibility.

As described above, in the carcass 4 having the envelope structure, the turned-up portion 12 of the first ply 6 overlaps the belt 20. The belt 20 is disposed radially inward of a tread 34. The overlapping contributes to the stiffness of the tread 34 portion. In the tire 2, the tread 34 portion has a high stiffness. The tire 2 is allowed to assuredly have a sufficient ground-contact surface during rapid acceleration, rapid deceleration, and rapid cornering. When a vehicle runs at low speed, the load applied to the tire 2 is light. Therefore, in low speed cornering of a vehicle, the tire 2 is not likely to be sufficiently deformed, and therefore, a sufficient ground-contact surface is not likely to be assured.

Various studies have been conducted on the tire structure from the viewpoint of improvement of cornering performance and acceleration performance. However, at present, there is no tire having cornering performance and acceleration performance in a well-balanced manner.

An object of the present invention is to provide a pneumatic tire having excellent cornering performance and acceleration performance.

### SOLUTION TO THE PROBLEMS

A pneumatic tire according to the present invention includes a tread, a pair of sidewalls, a pair of beads, a carcass, a belt, and a pair of fillers. The sidewalls extend from ends, respectively, of the tread almost inward in a radial direction. The beads are disposed axially inward of the sidewalls, respectively. The beads include cores and apexes. Each apex extends from a corresponding one of the cores outward in the radial direction. The carcass is extended on and between one of the beads and the other of the beads, along inside of the tread and the sidewalls. The carcass includes a carcass ply. The carcass ply includes a main portion and a pair of turned-up portions. The main portion is extended on and between one of the cores and the other of the cores. Each of the turned-up portions extends from a portion near a corresponding one of the cores outward in the radial direction. The belt and the carcass are layered radially inward of the tread. The fillers are disposed between the carcass and the beads, respectively. The fillers include inner portions and outer portions. The inner portions are disposed axially inward of the beads, respectively, and extend from near the cores, respectively, outward in the radial direction. The outer portions are disposed axially outward of the beads, respectively, and extend from near the cores, respectively, outward in the radial direction. The carcass ply includes multiple carcass cords aligned with each other. An absolute value of an angle of each of the carcass cords relative to an equator plane is not less than 80° and not greater than 90°. Ends of the inner portions and ends of the outer portions are disposed between ends of the belt and ends of the turned-up portions, respectively, in the radial direction. A ratio of a height, in the radial direction, of each apex to a cross-sectional height of the tire is not less than 45%. A ratio of a height, in the radial direction, of each inner portion to the cross-sectional height, and a ratio of a height, in the radial direction, of each outer portion to the cross-sectional height, are not less than 35%.

Preferably, in the pneumatic tire, the ratio of the height, in the radial direction, of each apex to the cross-sectional height is not greater than 65%.

Preferably, in the pneumatic tire, the carcass cords are formed of a polyethylene naphthalate fiber.

Preferably, in the pneumatic tire, the carcass cords have a fineness of not less than 3000 dtex and not greater than 6000 dtex.

Preferably, in the pneumatic tire, each of the fillers includes multiple filler cords aligned with each other. Each of the filler cords is tilted relative to the radial direction. An absolute value of an angle of the tilt is not less than 30° and not greater than 60°.

Preferably, in the pneumatic tire, the absolute value of the angle of the tilt is 45°.

Preferably, in the pneumatic tire, the filler cords are formed of an aramid fiber.

Preferably, in the pneumatic tire, the filler cords have a fineness of not less than 2000 dtex and not greater than 6000 dtex.

Preferably, in the pneumatic tire, a ratio of a distance in the radial direction from the end of each inner portion to the end of a corresponding one of the outer portions to the cross-sectional height is not less than 3% and not greater than 10%.

Preferably, in the pneumatic tire, a ratio of a height, in the radial direction, of each turned-up portion to the cross-sectional height is not greater than 35%.

In the pneumatic tire, the ends of the outer portions are disposed radially outward of the ends of the inner portions, respectively. A ratio of a difference between the height, in the radial direction, of each apex and the height, in the radial direction, of a corresponding one of the outer portions, to the cross-sectional height, is not less than -5% and not greater than 5%.

Preferably, in the pneumatic tire, each core includes a core wire and a plurality of sheath wires, and the sheath wires are helically wound around the core wire, and the carcass includes two carcass plies as the carcass ply, a first carcass ply which is one of the carcass plies is turned up around the cores, and a second carcass ply which is the other of the carcass plies is not turned up around the cores, and ends of the second carcass ply are disposed near the respective cores.

### ADVANTAGEOUS EFFECTS OF THE INVENTION

In the pneumatic tire according to the present invention, the apex, the inner portion, and the outer portion each have an appropriate height in the radial direction. The tire has a sufficient stiffness in the lateral direction.

In the tire, the carcass includes multiple carcass cords. The angle of each carcass cord relative to the equator plane is not less than 80° and not greater than 90° . The carcass contributes to assuring of the flexibility in the rotational direction of the tire.

In the tire, the end of the inner portion and the end of the outer portion are disposed between the end of the belt and the end of the turn-up portion in the radial direction. In the tire, the turn-up portion does not overlap the belt. In the tire, the influence of the turn-up portion on the stiffness is reduced. In the tire, the adjustment of the angle of the carcass cords is effective in improving the flexibility. In addition, because the influence of the turn-up portion on the stiffness of the tread portion is reduced, the tire is sufficiently deformed even when a light load is applied to the tire. The tire allows a sufficient ground-contact surface to be assured also in low-speed cornering of a vehicle.

Thus, the tire has improved flexibility in the rotational direction while assuring stiffness in the lateral direction. In addition, the tire allows a sufficient ground-contact surface to be assured both in a low-speed region where a light load is applied to the tire and in a high-speed region where a heavy load is applied to the tire. The tire has excellent cornering performance and acceleration performance. The present invention provides a pneumatic tire that can provide rapid cornering and outstanding acceleration.

### BRIEF DESCRIPTION OF THE DRAWINGS

[FIG. 1] FIG. 1 is a cross-sectional view showing a part of a pneumatic tire not covered by the present invention.
[FIG. 2] FIG. 2 is a schematic diagram showing an arrangement of carcass cords included in a carcass.
[FIG. 3] FIG. 3 is an enlarged cross-sectional view showing a part of the tire in FIG. 1.
[FIG. 4] FIG. 4 is a schematic diagram showing an arrangement of filler cords included in a filler.
[FIG. 5] FIG. 5 is a cross-sectional view showing a part of a pneumatic tire according to another embodiment not covered by the present invention.
[FIG. 6] FIG. 6 is a cross-sectional view showing a core of a bead in the tire in FIG. 5.
[FIG. 7] FIG. 7 is a cross-sectional view showing a part of a conventional pneumatic tire.

### DESCRIPTION OF EMBODIMENTS

The following will describe in detail embodiments with reference where appropriate to the accompanying drawing.

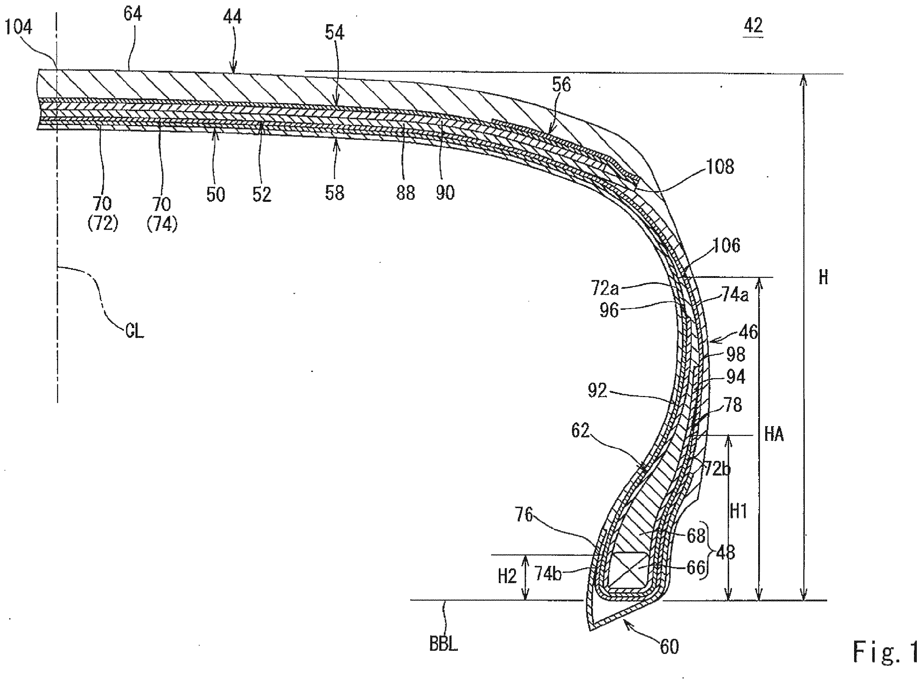

FIG. 1 shows a pneumatic tire 42. In FIG. 1, the up-down direction represents the radial direction of the tire 42, the left-right direction represents the axial direction of the tire 42, and the direction perpendicular to the surface of the drawing sheet represents the circumferential direction of the tire 42. In FIG. 1, an alternate long and short dash line CL represents the equator plane of the tire 42. The shape of the tire 42 is symmetric about the equator plane except for a tread pattern.

The tire 42 includes a tread 44, a pair of sidewalls 46, a pair of beads 48, a carcass 50, a belt 52, a band 54, a pair of edge bands 56, an inner liner 58, a pair of chafers 60, and a pair of fillers 62. The tire 42 is of a tubeless type. The tire 42 is mounted to a vehicle (four-wheeled automotive vehicle) which runs on circuits. The tire 42 is for racing.

The tread 44 has a shape that projects outward in the radial direction. The tread 44 forms a tread surface 64 that comes into contact with a road surface. The tread 44 is formed of a crosslinked rubber which exhibits excellent wear resistance, heat resistance, and grip performance. The tread 44 of the tire 42 does not have a groove. The tire 42 is of a slick type. The tread 44 may have grooves which form a tread pattern.

Each sidewall 46 extends almost inward from a corresponding end of the tread 44 in the radial direction. The sidewall 46 is formed of crosslinked rubber having excellent cut resistance and weather resistance. The sidewall 46 is disposed axially outward of the carcass 50. The sidewall 46 prevents damage to the carcass 50.

Each bead 48 is disposed axially inward of the corresponding sidewall 46. The bead 48 is disposed in a radially inner portion of the tire 42. The bead 48 includes a core 66 and an apex 68. The core 66, which is ring-shaped, includes a wound non-stretchable wire. A typical material of the wire is steel. The apex 68 extends outward from the core 66 in the radial direction. The apex 68 is tapered outward in the radial direction. The apex 68 is formed of a highly hard crosslinked rubber.

The carcass 50 includes carcass plies 70. The carcass 50 includes a first carcass ply 72 and a second carcass ply 74, i.e., two carcass plies 70. The carcass 50 may include three or more carcass plies 70.

In the tire 42, the first carcass ply 72 and the second carcass ply 74 are extended on and between the beads 48 on both sides. The first carcass ply 72 and the second carcass ply 74 are extended along the inside of the tread 44 and the sidewalls 46.

The first carcass ply 72 is turned up around the cores 66 on both sides from the axially inner side toward the axially outer side. By the turning-up, the first carcass ply 72 has a first main portion 72a and a pair of first turned-up portions 72b formed therein. The first carcass ply 72 includes the first main portion 72a and the pair of first turned-up portions 72b. The first main portion 72a is extended on and between one of the cores 66 and the other of the cores 66. Each first turned-up portion 72b is extended radially outward from a portion near the core 66.

The second carcass ply 74 is turned up around the cores 66 on both sides from the axially outer side toward the axially inner side. By the turning-up, the second carcass ply 74 has a second main portion 74a and a pair of second turned-up portions 74b formed therein. The second carcass ply 74 includes the second main portion 74a and the pair of second turned-up portions 74b. The second main portion 74a is extended on and between one of the cores 66 and the other of the cores 66. Each second turned-up portion 74b is extended radially outward from a portion near the core 66.

The first main portion 72a is disposed inward of the second main portion 74a. In the sidewall 46 portion of the tire 42, the bead 48 and the filler 62 are disposed between the first main portion 72a and the second main portion 74a. The first turned-up portion 72b is disposed axially inward of the second main portion 74a. The second turned-up portion 74b is disposed axially inward of the first main portion 72a. In the tire 42, an end 76 of the second turned-up portion 74b is disposed radially inward of an end 78 of the first turned-up portion 72b. The end 76 of the second turned-up portion 74b may be disposed radially outward of the end 78 of the first turned-up portion 72b.

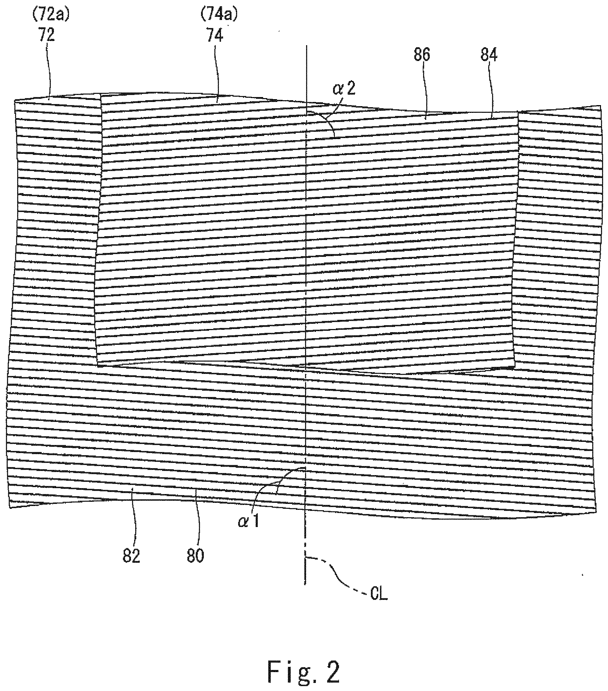

FIG. 2 is a development schematically showing a part of the first carcass ply 72 and a part of the second carcass ply 74. FIG. 2 shows the tread surface 64 of the tire 42 shown in FIG. 1 as viewed from thereabove. In FIG. 2, the up-down direction represents the circumferential direction of the tire 42, the left-right direction represents the axial direction of the tire 42, and the direction perpendicular to the surface of the drawing sheet represents the radial direction of the tire 42.

The first carcass ply 72 includes multiple first carcass cords 80 aligned with each other, and topping rubber 82. In the tire 42, the first carcass cord 80 is formed of an organic fiber. Examples of a typical organic fiber employed in the cord of the tire 42 include polyester fibers, nylon fibers, rayon fibers, polyethylene naphthalate fibers, and aramid fibers. As the organic fiber for the first carcass cord 80, polyethylene naphthalate fibers are preferable from the viewpoint that the flexibility in the rotational direction and sufficient lateral stiffness of the tire 42 are assured. The fineness of the first carcass cord 80 is preferably not less than 3000 dtex from the viewpoint of the stiffness of the first carcass ply 72. The fineness of the first carcass cord 80 is preferably not greater than 6000 dtex from the viewpoint of the influence thereof on the mass of the tire 42.

In the tire 42, the density of the first carcass cords 80 included in the first carcass ply 72 is preferably not less than 30 ends/5 cm. As a result, the first carcass ply 72 has an appropriate stiffness. In the tire 42, the density of the first carcass cords 80 is preferably not greater than 75 ends/5 cm. As a result, a gap between the first carcass cords 80 is appropriately maintained. A sufficient amount of the topping rubber 82 is provided between the first carcass cords 80, and therefore, the first carcass ply 72 is not likely to be loose.

In the description herein, the density of cords included in a component such as the first carcass ply 72 is obtained by measuring the number (ends) of cross-sections of cords per width of 5 cm of the component in a cross-section perpendicular to the length direction of the cord in the component.

The second carcass ply 74 includes multiple second carcass cords 84 aligned with each other, and topping rubber 86. In the tire 42, the second carcass cord 84 is formed of an organic fiber. Also for the second carcass cord 84, as with the first carcass cord 80 described above, polyethylene naphthalate fibers are preferable as the organic fiber for the second carcass cord 84. The fineness of the second carcass cord 84 is preferably not less than 3000 dtex from the viewpoint of the stiffness of the second carcass ply 74. The fineness of the second carcass cord 84 is preferably not greater than 6000 dtex from the viewpoint of the influence thereof on the mass of the tire 42.

In the tire 42, the density of the second carcass cords 84 included in the second carcass ply 74 is preferably not less than 30 ends/5 cm. As a result, the second carcass ply 74 has an appropriate stiffness. In the tire 42, the density of the second carcass cords 84 is preferably not greater than 75 ends/5 cm. As a result, a gap between the second carcass cords 84 is appropriately maintained. A sufficient amount of the topping rubber 86 is provided between the second carcass cords 84, and therefore, the second carcass ply 74 is not likely to be loose.

As shown in FIG. 2, in the tire 42, the first carcass cord 80 is tilted relative to the equator plane. In FIG. 2, α1 represents an angle of the first carcass cord 80 relative to the equator plane. The second carcass cord 84 is also tilted relative to the equator plane. In FIG. 2, α2 represents an angle of the second carcass cord 84 relative to the equator plane. As in the carcass 50 shown in FIG. 2, in the case where the first carcass cord 80 and the second carcass cord 84 are tilted relative to the equator plane, a direction in which the first carcass cord 80 is tilted is preferably opposite to a direction in which the second carcass cord 84 is tilted. In addition, the carcass 50 is preferably structured such that an absolute value of the angle α1 is equal to an absolute value of the angle α2. As a result, the carcass 50 has well-balanced stiffness on both sides of the equator plane.

The first carcass cord 80 included in the first main portion 72a of the first carcass ply 72 is extended on and between the left and right cores 66. The first carcass cord 80, which is tilted relative to the equator plane in the tread 44 portion of the tire 42, is tilted relative to the radial direction in the sidewall 46 portion of the tire 42. The second turned-up portion 74b of the second carcass ply 74 is formed by turning up the second carcass ply 74 around the core 66 from the axially outer side toward the axially inner side. In the case where the direction in which the first carcass cord 80 is tilted is opposite to the direction in which the second carcass cord 84 is tilted in the tread 44 portion of the tire 42, the direction in which the second carcass cord 84 included in the second turned-up portion 74b is tilted is the same as the direction in which the first carcass cord 80 included in the first main portion 72a is tilted in the sidewall 46 portion of the tire 42.

The second carcass cord 84 included in the second main portion 74a of the second carcass ply 74 is extended on and between the left and right cores 66. The second carcass cord 84, which is tilted relative to the equator plane in the tread 44 portion of the tire 42, is tilted relative to the radial direction in the sidewall 46 portion of the tire 42. The first turned-up portion 72b of the first carcass ply 72 is formed by turning up the first carcass ply 72 around the core 66 from the axially inner side toward the axially outer side. In the case where the direction in which the first carcass cord 80 is tilted is opposite to the direction in which the second carcass cord 84 is tilted in the tread 44 portion of the tire 42, the direction in which the first carcass cord 80 included in the first turned-up portion 72b is tilted is the same as the direction in which the second carcass cord 84 included in the second main portion 74a is tilted in the sidewall 46 portion of the tire 42.

As shown in FIG. 1, the belt 52 is disposed radially inward of the tread 44. The belt 52 is layered over the carcass 50. The belt 52 reinforces the carcass 50. The belt 52 includes an inner layer 88 and an outer layer 90. A width of the inner layer 88 is slightly greater than a width of the outer layer 90 in the axial direction.

Although not shown, the inner layer 88 and the outer layer 90 each include multiple belt cords aligned with each other, and topping rubber. Each belt cord is tilted relative to the equator plane. An absolute value of the tilt angle is typically not less than 10° and not greater than 35°. A direction in which the belt cord of the inner layer 88 is tilted relative to the equator plane is opposite to a direction in which the belt cord of the outer layer 90 is tilted relative to the equator plane. A preferable material of the belt cord is steel. An organic fiber may be used for the cord. A width, in the axial direction, of the belt 52 is preferably not less than 0.7 times the maximal width of the tire 42. The belt 52 may include three or more layers.

The band 54 is disposed radially outward of the belt 52. In the axial direction, a width of the band 54 is almost equal to the width of the belt 52. The band 54 is also called a full band. Although not shown, the band 54 includes a full band cord and topping rubber. The full band cord is helically wound. The band 54 has a so-called jointless structure. The full band cord extends substantially in the circumferential direction. An angle of the full band cord relative to the circumferential direction is not greater than 5°, and more preferably not greater than 2°. The full band cord holds the belt 52, which inhibits lifting of the belt 52. The full band cord is formed of an organic fiber. Preferable examples of the organic fiber include nylon fibers, polyester fibers, rayon fibers, polyethylene naphthalate fibers, and aramid fibers.

Each edge band 56 is disposed radially outward of the belt 52, and near a corresponding end of the belt 52. Although not shown, the edge band 56 includes an edge band cord and topping rubber. The edge band cord is helically wound. The band 54 has a so-called jointless structure. The edge band cord extends substantially in the circumferential direction. An angle of the edge band cord relative to the circumferential direction is not greater than 5°, and more preferably not greater than 2°. The edge band cord holds the ends of the belt 52, which inhibits lifting of the belt 52. The edge band cord is formed of an organic fiber. Preferable examples of the organic fiber include nylon fibers, polyester fibers, rayon fibers, polyethylene naphthalate fibers, and aramid fibers.

The inner liner 58 is disposed inward of the carcass 50. The inner liner 58 is joined to an inner surface of the carcass 50. The inner liner 58 is formed of a crosslinked rubber having excellent airtightness. A typical base rubber of the inner liner 58 is isobutylene-isoprene-rubber or halogenated isobutylene-isoprene-rubber. The inner liner 58 maintains the internal pressure of the tire 42.

Each chafer 60 is disposed near the corresponding bead 48. When the tire 42 is mounted on a rim, the chafer 60 is in contact with the rim. By the contact, a portion near the bead 48 is protected. The chafer 60 of the tire 42 is formed of a fabric and a rubber with which the fabric is impregnated.

Each filler 62 is disposed near the corresponding bead 48. The filler 62 is disposed between the bead 48 and the carcass 50. The filler 62 is turned up around the core 66 from the axially inner side toward the axially outer side or from the axially outer side toward the axially inner side. Thus, the filler 62 has an inner portion 92 and an outer portion 94 formed therein. The filler 62 includes the inner portion 92 and the outer portion 94.

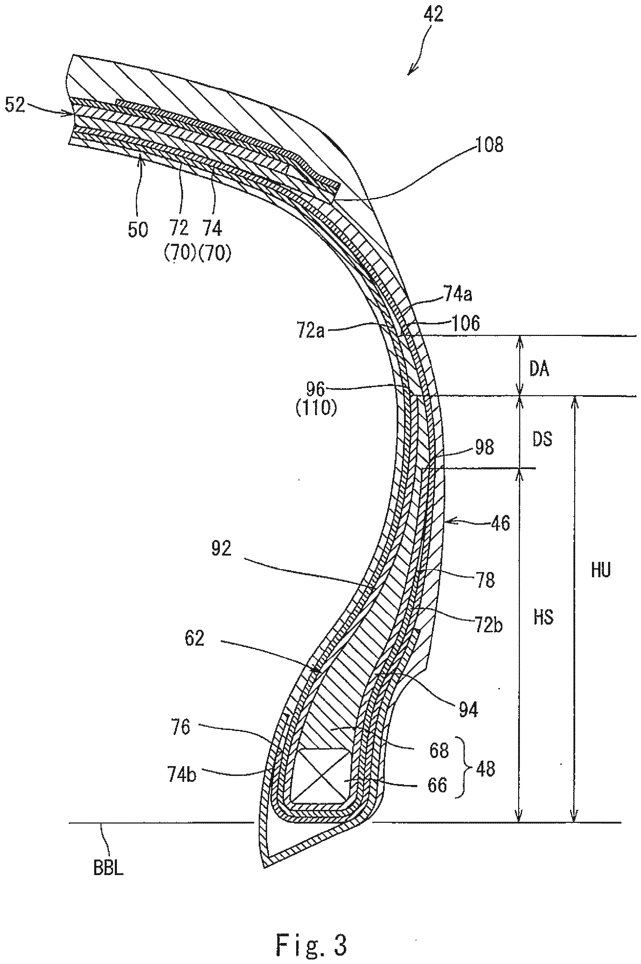

FIG. 3 shows a part of the tire 42 not covered by the invention shown in FIG. 1. In FIG. 3, the sidewall 46 portion of the tire 42 is shown. In FIG. 3, the up-down direction represents the radial direction of the tire 42, the left-right direction represents the axial direction of the tire 42, and the direction perpendicular to the surface of the drawing sheet represents the circumferential direction of the tire 42.

In the tire 42, the inner portion 92 is disposed axially inward of the bead 48. The inner portion 92 extends radially outward from a portion near the core 66 of the bead 48. The outer portion 94 is disposed axially outward of the bead 48. The outer portion 94 extends radially outward from a portion near the core 66.

In the tire 42 not covered by the present invention, an end 96 of the inner portion 92 is disposed radially outward of an end 98 of the outer portion 94. In a tire according to the present invention, the filler 62 is structured such that the end 96 of the inner portion 92 is disposed radially inward of the end 98 of the outer portion 94.

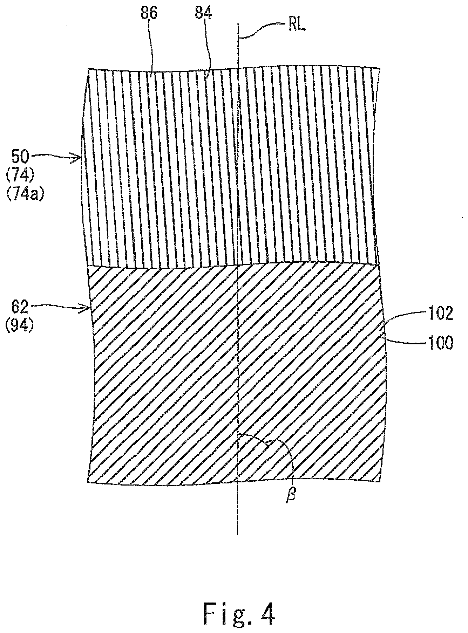

FIG. 4 schematically shows a part of the filler 62 together with a part of the carcass 50. FIG. 4 shows a side surface of the tire 42 as viewed from the right side in FIG. 1 or FIG. 3. In FIG. 4, the up-down direction represents the radial direction of the tire 42, the left-right direction represents the circumferential direction of the tire 42, and the direction perpendicular to the surface of the drawing sheet represents the axial direction of the tire 42. FIG. 4 shows a part of the outer portion 94 of the filler 62 and a part of the second main portion 74a of the second carcass ply 74. In FIG. 4, a solid line RL represents a straight line extending in the radial direction. The solid line RL is a reference line representing the radial direction in FIG. 4.

In the tire 42, the filler 62 includes multiple filler cords 100 aligned with each other, and topping rubber 102. In the tire 42, the filler cord 100 is formed of an organic fiber. Of the above-described typical organic fibers (polyester fibers, nylon fibers, rayon fibers, polyethylene naphthalate fibers, and aramid fibers) for use in the cords of the tire 42, aramid fibers are preferably used as the organic fiber for the filler cord 100 from the viewpoint that a sufficient lateral stiffness is assured. The fineness of the filler cord 100 is preferably not less than 2000 dtex from the viewpoint of the stiffness of filler 62. The fineness of the filler cord 100 is preferably not greater than 6000 dtex from the viewpoint of the influence thereof on the mass of the tire 42.

In the tire 42, the density of the filler cords 100 included in the filler 62 is preferably not less than 30 ends/5 cm. As a result, the filler 62 has an appropriate stiffness. In the tire 42, the density of the filler cords 100 is preferably not greater than 75 ends/5 cm. As a result, a gap between the filler cords 100 is appropriately maintained. A sufficient amount of the topping rubber 102 is provided between the filler cords 100, and therefore, the filler 62 is not likely to be loose.

As shown in FIG. 4, in the tire 42, the filler cord 100 is tilted relative to the radial direction. The inner portion 92 is disposed axially inward of the outer portion 94. As described above, the filler 62 is turned up around the core 66. Therefore, although not shown, a direction in which the filler cord 100 included in the inner portion 92 is tilted is opposite to a direction in which the filler cord 100 included in the outer portion 94 is tilted.

As described above, in the sidewall 46 portion of the tire 42, the second carcass cord 84 included in the second main portion 74a is tilted relative to the radial direction. From the viewpoint that a sufficient force against shearing that occurs between the filler 62 and the carcass 50 is assured, the direction in which the filler cord 100 included in the outer portion 94 is tilted is preferably opposite to the direction in which the second carcass cord 84 included in the second main portion 74a is tilted, as shown in FIG. 4. In the sidewall 46 portion of the tire 42, the direction in which the first carcass cord 80 included in the first turned-up portion 72b is tilted is the same as the direction in which the second carcass cord 84 included in the second main portion 74a is tilted. Therefore, in this case, the direction in which the filler cord 100 is tilted is also opposite to the direction in which the first carcass cord 80 included in the first turned-up portion 72b is tilted.

As described above, in the sidewall 46 portion of the tire 42, the first carcass cord 80 included in the first main portion 72a is tilted relative to the radial direction. Although not shown, from the viewpoint that a sufficient force against shearing that occurs between the filler 62 and the carcass 50 is assured, the direction in which the filler cord 100 included in the inner portion 92 is tilted is preferably opposite to the direction in which the first carcass cord 80 included in the first main portion 72a is tilted. In the sidewall 46 portion of the tire 42, the direction in which the second carcass cord 84 included in the second turned-up portion 74b is tilted is the same as the direction in which the first carcass cord 80 included in the first main portion 72a is tilted. Therefore, in this case, the direction in which the filler cord 100 is tilted is also opposite to the direction in which the second carcass cord 84 included in the second turned-up portion 74b is tilted.

In FIG. 4, β represents an angle of the filler cord 100 included in the outer portion 94 relative to the reference line RL. In the present invention, the angle β represents an angle of the filler cord 100 relative to the radial direction. The direction in which the filler cord 100 included in the inner portion 92 is tilted is opposite to the direction in which the filler cord 100 included in the outer portion 94 is tilted, and therefore, in the case where the angle of the filler cord 100 included in the outer portion 94 relative to the reference line RL is represented by "β," an angle of the filler cord 100 included in the inner portion 92 relative to the reference line RL is represented by "-β".

In the tire 42, from the viewpoint that a force against shearing that occurs between the filler 62 and the carcass 50 is assured, an absolute value of the angle β of the filler cord 100 is preferably not less than 30 ° and is preferably not greater than 60°. From the viewpoint that a sufficient force against shearing that occurs between the filler 62 and the carcass 50 is assured, the absolute value of the angle β is more preferably set so as to be 45°.

In FIG. 1, a solid line BBL represents a bead base line. The bead base line corresponds to a line that defines the rim diameter (see JATMA) of a rim (not shown) on which the tire 42 is mounted. The bead base line extends in the axial direction.

In FIG. 1, a double-headed arrow H represents a height in the radial direction from the bead base line to an equator 104 of the tire 42. The height H is a cross-sectional height (see JATMA). A double-headed arrow HA represents a height in the radial direction from the bead base line to an outer end 106 of the apex 68. The height HA is a height, in the radial direction, of the apex 68.

In FIG. 3, a double-headed arrow HU represents a height in the radial direction from the bead base line to the end 96 of the inner portion 92. The height HU is a height, in the radial direction, of the inner portion 92. A double-headed arrow HS represents a height in the radial direction from the bead base line to the end 98 of the outer portion 94. The height HS is a height, in the radial direction, of the outer portion 94.

In the tire 42, a ratio of the height HA of the apex 68 to the cross-sectional height H is not less than 45%. In the tire 42, the apex 68 contributes to the stiffness in the lateral direction. From this viewpoint, the ratio is preferably not less than 50%. If the apex 68 has an excessive height HA, the apex 68 exerts an influence on the flexibility in the rotational direction. From the viewpoint that the flexibility is appropriately maintained, the ratio is preferably not greater than 65%.

In the tire 42, a ratio of the height HU of the inner portion 92 to the cross-sectional height H is not less than 35%. In the tire 42, the inner portion 92 contributes to the stiffness in the lateral direction. From this viewpoint, the ratio is preferably not less than 37%, and more preferably not less than 40%. If the inner portion 92 has an excessive height HU, the inner portion 92 exerts an influence on the flexibility in the rotational direction. From the viewpoint that the flexibility is appropriately maintained, the ratio is preferably not greater than 70%, and more preferably not greater than 65%.

In the tire 42, a ratio of the height HS of the outer portion 94 to the cross-sectional height H is not less than 35%. In the tire 42, the outer portion 94 contributes to the stiffness in the lateral direction. From this viewpoint, the ratio is preferably not less than 37%, and more preferably not less than 40%. If the outer portion 94 has an excessive height HS, the outer portion 94 exerts an influence on the flexibility in the rotational direction. From the viewpoint that the flexibility is appropriately maintained, the ratio is preferably not greater than 70%, and more preferably not greater than 65%.

In particular, in the tire 42, the ratio of the height HU of the inner portion 92 to the cross-sectional height H, and the ratio of the height HS of the outer portion 94 to the cross-sectional height H, are both not less than 35%. In the tire 42, the ratio of the height HU of the inner portion 92 to the cross-sectional height H, and the ratio of the height HS of the outer portion 94 to the cross-sectional height H, are also both not less than 35%. In the tire 42, the inner portion 92 and the outer portion 94 each have a sufficient height in the radial direction. The filler 62 effectively contributes to assuring of the lateral stiffness.

Thus, in the tire 42, the apex 68, the inner portion 92, and the outer portion 94 each have an appropriate height in the radial direction. In the tire 42, a sufficient stiffness in the lateral direction is obtained.

In the tire 42, the first carcass ply 72 includes the multiple first carcass cords 80. The absolute value of the angle α1 (see FIG. 2) of each first carcass cord 80 relative to the equator plane is not less than 80° and not greater than 90°. In the tire 42, the influence of the first carcass cord 80 on the flexibility in the rotational direction of the tire 42 is reduced.

In the tire 42, the second carcass ply 74 includes the multiple second carcass cords 84. The absolute value of the angle α2 (see FIG. 2) of each second carcass cord 84 relative to the equator plane is not less than 80° and not greater than 90°. In the tire 42, the influence of the second carcass cord 84 on the flexibility is reduced.

Thus, in the tire 42, the carcass 50 includes the multiple carcass cords. The absolute value of the angle of each carcass cord relative to the equator plane is not less than 80° and not greater than 90°. In the tire 42, the angle of the carcass cord is appropriately adjusted so that the influence on the flexibility in the rotational direction of the tire 42 is effectively reduced. Although the carcass 50 exerts an influence on the stiffness of the entire tire 42, the carcass 50 contributes to assuring of the flexibility in the tire 42.

In the tire 42, the end 78 of the first turned-up portion 72b is disposed radially outward of the end 76 of the second turned-up portion 74b. Of the ends of the turned-up portions included in the carcass 50, the end 78 of the first turned-up portion 72b is disposed in the outermost side portion in the radial direction. In the tire 42, the first turned-up portion 72b exerts an influence on cornering force. Specifically, it is observed that when a heavy load is applied to the tire 42, cornering force tends to increase with increase in the length of the first turned-up portion 72b, whereas, when a light load is applied to the tire 42, cornering force tends to decrease with increase in the length of the first turned-up portion 72b.

In the tire 42, the end 96 of the inner portion 92 and the end 98 of the outer portion 94 are disposed between an end 108 of the belt 52 and the end 78 of the first turned-up portion 72b in the radial direction. In the tire 42, the first turned-up portion 72b does not overlap the belt 52. Because the end 76 of the second turned-up portion 74b is disposed radially inward of the end 78 of the first turned-up portion 72b, the second turned-up portion 74b does not overlap the belt 52, either. The tire 42 does not include a carcass having an envelope structure. In the tire 42, the influence of the turned-up portion on the stiffness is reduced. In the tire 42, the adjustment of the angle of the carcass cord is effective in improving the flexibility. In addition, the influence of the turned-up portion on the stiffness of the tread 44 portion is reduced. Therefore, even when the load applied to the tire 42 is light, the tire 42 is sufficiently deformed. In the tire 42, also in low speed cornering of a vehicle, a sufficient ground-contact surface is assured.

Thus, the tire 42 has improved flexibility in the rotational direction while assuring stiffness in the lateral direction. In addition, in the tire 42, a sufficient ground-contact surface is assured both in a low-speed region where a light load is applied to the tire 42 and in a high-speed region where a heavy load is applied to the tire 42. The tire 42 has excellent cornering performance and acceleration performance. According to the present invention, the pneumatic tire 42 can provide rapid cornering and outstanding acceleration.

In FIG. 1, a double-headed arrow H1 represents a height in the radial direction from the bead base line to the end 78 of the first turned-up portion 72b. The height H1 is a height, in the radial direction, of the first turned-up portion 72b. A double-headed arrow H2 represents a height in the radial direction from the bead base line to the end 76 of the second turned-up portion 74b. The height H2 is a height, in the radial direction, of the second turned-up portion 74b.

In the tire 42, a ratio of the height H1 of the first turned-up portion 72b to the cross-sectional height H is preferably not less than 5% and not greater than 35%. If the ratio is set so as to be not less than 5%, the first turned-up portion 72b is prevented from being pulled off due to the action of a tensile force. If the ratio is set so as to be not greater than 35%, the influence of the first turned-up portion 72b on the flexibility in the rotational direction of the tire 42 is effectively reduced.

In the tire 42, a ratio of the height H2 of the second turned-up portion 74b to the cross-sectional height H is preferably not less than 5% and not greater than 35%. If the ratio is set so as to be not less than 5%, the second turned-up portion 74b is prevented from being pulled off due to the action of a tensile force. If the ratio is set so as to be not greater than 35%, the influence of the second turned-up portion 74b on the flexibility in the rotational direction of the tire 42 is effectively reduced.

As described above, in the tire 42 not covered by the present invention, the end 96 of the inner portion 92 and the end 98 of the outer portion 94 are disposed between the end 108 of the belt 52 and the end 78 of the first turned-up portion 72b in the radial direction. The end 98 of the outer portion 94 is disposed radially inward of the end 96 of the inner portion 92. The end 76 of the second turned-up portion 74b is disposed radially inward of the end 78 of the first turned-up portion 72b. A portion of the tire 42 from the bead 48 to the sidewall 46 is structured such that the height HU of the inner portion 92, the height HS of the outer portion 94, the height H1 of the first turned-up portion 72b, and the height H2 of the second turned-up portion 74b are appropriately adjusted, and the stiffness of that portion decreases radially outward in a stepwise manner. This structure allows the tire 42 to exhibit flexibility in the rotational direction, and allows the movement of the tire 42 to be effectively absorbed during acceleration or braking. Therefore, in the tire 42, the tread surface 64 is inhibited from slipping on a road surface, and good transient characteristics are obtained during acceleration from low speed to high speed or during deceleration from high speed to low speed. The good transient characteristics contribute to rapid cornering and outstanding acceleration. From this viewpoint, the portion of the tire 42 from the bead 48 to the sidewall 46 is preferably structured such that the heights of the inner portion 92, the outer portion 94, the first turned-up portion 72b, and the second turned-up portion 74b are each adjusted so as to contribute to the stiffness, and the end 96 of the inner portion 92, the end 98 of the outer portion 94, the end 78 of the first turned-up portion 72b, and the end 76 of the second turned-up portion 74b are disposed in a dispersed manner in the radial direction.

As shown in FIGS. 1 and 3, in the tire 42, a portion that includes the bead 48 and the filler 62 has a shape that tapers radially outward. The portion that includes the bead 48 and the filler 62 is structured such that the stiffness of the portion gradually decreases radially outward. The portion contributes to the flexibility in the rotational direction of the tire 42. As described above, in the tire 42, the height HA, in the radial direction, of the apex 68 is set so as to be not less than 45% of the cross-sectional height H. In the case of conventional apexes, the height thereof in the radial direction is set so as to be about 40% of the cross-sectional height. Therefore, the height HA, in the radial direction, of the apex 68 of the tire 42 is greater than the height, in the radial direction, of an apex of a conventional tire. Because the apex 68 has the great height HA in the radial direction, the portion that includes the bead 48 and the filler 62 greatly contributes to the flexibility in the rotational direction of the tire 42. In the tire 42, very good transient characteristics are obtained during acceleration from low speed to high speed or during deceleration from high speed to low speed. The very good transient characteristics further contribute to rapid cornering and outstanding acceleration.

In FIG. 3, a double-headed arrow DS represents a distance in the radial direction from the end 96 of the inner portion 92 to the end 98 of the outer portion 94. In FIG. 3, the end 96 of the inner portion 92 is disposed radially outward of the end 98 of the outer portion 94. Therefore, the distance DS is equal to a difference (HU - HS) between the height HU, in the radial direction, of the inner portion 92 and the height HS, in the radial direction, of the outer portion 94. In the case of the tire according to the present invention, where the end 98 of the outer portion 94 is disposed radially outward of the end 96 of the inner portion 92, the distance DS is equal to a difference (HS - HU) between the height HS, in the radial direction, of the outer portion 94 and the height HU, in the radial direction, of the inner portion 92. The distance DS contributes to the effect of the present invention to the same extent between the case where the end 96 of the inner portion 92 is disposed radially outward of the end 98 of the outer portion 94 and the case where the end 98 of the outer portion 94 is disposed radially outward of the end 96 of the inner portion 92.

In the tire 42, a ratio of the distance DS to the cross-sectional height H is preferably not less than 3% and not greater than 10%. If the ratio is set so as to be not less than 3%, the end 96 of the inner portion 92 and the end 98 of the outer portion 94 are prevented from being close to each other. The concentration of strain on the end 96 of the inner portion 92 and the end 98 of the outer portion 94 is inhibited, and therefore, the end 96 of the inner portion 92 and the end 98 of the outer portion 94 are prevented from being a portion from which damage is caused. In the tire 42, good durability is maintained. If the ratio is set so as to be not greater than 10%, the inner portion 92 and the outer portion 94, i.e., the filler 62, effectively act to maintain the shape of the bead 48, particularly the apex 68. In the tire 42, the shape that has been determined during the designing is reproduced in the apex 68 almost as it is. The portion that includes the bead 48 and the filler 62 has a shape that tapers radially outward, and therefore, the tire 42 allows sufficient flexibility in the rotational direction to be assured. In addition, there is substantially no difference in reinforcement action between the inner portion 92 and the outer portion 94, and therefore, the same cornering performance is obtained between when a vehicle to which the tire 42 is mounted turns to the right and when the vehicle turns to the left. Because the inner portion 92 and the outer portion 94 are formed by turning up a single filler 62 around the core 66, better productivity is achieved as compared to a tire in which the inner portion and the outer portion are formed using two fillers.

In FIG. 3, a double-headed arrow DA represents a distance in the radial direction from the outer end 106 of the apex 68 to an end 110 of the filler 62. As described above, in the tire 42, the end 96 of the inner portion 92 is disposed radially outward of the end 98 of the outer portion 94. Therefore, the distance DA is represented by a difference between the height HA, in the radial direction, of the apex 68 and the height HU, in the radial direction, of the inner portion 92. In the present invention, the distance DA is represented by a "positive number" in the case where the end 96 of the inner portion 92 is disposed radially inward of the outer end 106 of the apex 68, and by a "negative number" in the case where the end 96 of the inner portion 92 is disposed radially outward of the outer end 106 of the apex 68. In the case where the end 98 of the outer portion 94 is disposed outward of the end 96 of the inner portion 92, the distance DA is represented by a difference between the height HA, in the radial direction, of the apex 68 and the height HU, in the radial direction, of the outer portion 94. In this case, the distance DA is represented by a "positive number" in the case where the end 98 of the outer portion 94 is disposed radially inward of the outer end 106 of the apex 68, and by a "negative number" in the case where the end 98 of the outer portion 94 is disposed radially outward of the outer end 106 of the apex 68.

As described above, in the tire 42, the filler 62 not only contributes to assuring of the lateral stiffness, but also contributes to the flexibility in the rotational direction of the tire 42 by maintaining the shape of the apex 68. As described above, the height HA, in the radial direction, of the apex 68 of the tire 42 is greater than that of an apex of a conventional tire. Therefore, the apex 68 is more easily deformed than an apex of a conventional tire.

In the tire 42, , a ratio of the distance DA to the cross-sectional height H is set so as to be not less than -5% and not greater than 5%. In other words, the ratio is not less than -5% and is not greater than 5%. This allows the filler 62 to effectively maintain the shape of the apex 68. In the tire 42, the shape of the apex 68 is not likely to be deformed during molding. The portion that includes the bead 48 and the filler 62 is formed so as to have a shape that tapers radially outward. Therefore, in the tire 42, sufficient flexibility in the rotational direction is assured.

In the tire 42, the ratio of the distance DA to the cross-sectional height H is more preferably not less than 2%. As a result, the end 96 of the inner portion 92 or the end 98 of the outer portion 94 is covered by the apex 68, and therefore, the concentration of strain on the end 96 of the inner portion 92 or the end 98 of the outer portion 94 is reduced. The tire 42 has excellent durability.

In production of the tire 42, a plurality of rubber components are assembled to obtain a raw cover (unvulcanized tire 42). The raw cover is placed in a mold. The outer surface of the raw cover is brought into contact with the cavity surface of the mold. The inner surface of the raw cover is brought into contact with a bladder or core. The raw cover is pressurized and heated in the mold. The pressurizing and heating causes the rubber composition of the raw cover to flow. The heating causes the rubber to undergo crosslinking reaction. Thus, the tire 42 is obtained.

In the present invention, the dimensions and angles of the components of the tire 42 are measured in a state where the tire 42 is mounted on a normal rim, and the tire 42 is inflated with air to a normal internal pressure. During the measurement, no load is applied to the tire 42. In the case where the tire 42 is for a passenger car, the dimensions and angles are measured in a state where the internal pressure is 180 kPa.

In the description herein, the normal rim represents a rim which is specified according to the standard with which the tire 42 complies . The "standard rim" in the JATMA standard, the "Design Rim" in the TRA standard, and the "Measuring Rim" in the ETRTO standard are included in the normal rim.

In the description herein, the normal internal pressure represents an internal pressure that is specified according to the standard with which the tire 42 complies. The "maximum air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard, are included in the normal internal pressure.

In the description herein, the normal load represents a load that is specified according to the standard with which the tire 42 complies. The "maximum load capacity" in the JATMA standard, the "maximum value" recited in "TIRE LOAD LIMITS AT VARIOUS COLD INFLATION PRESSURES" in the TRA standard, and the "LOAD CAPACITY" in the ETRTO standard are included in the normal load.

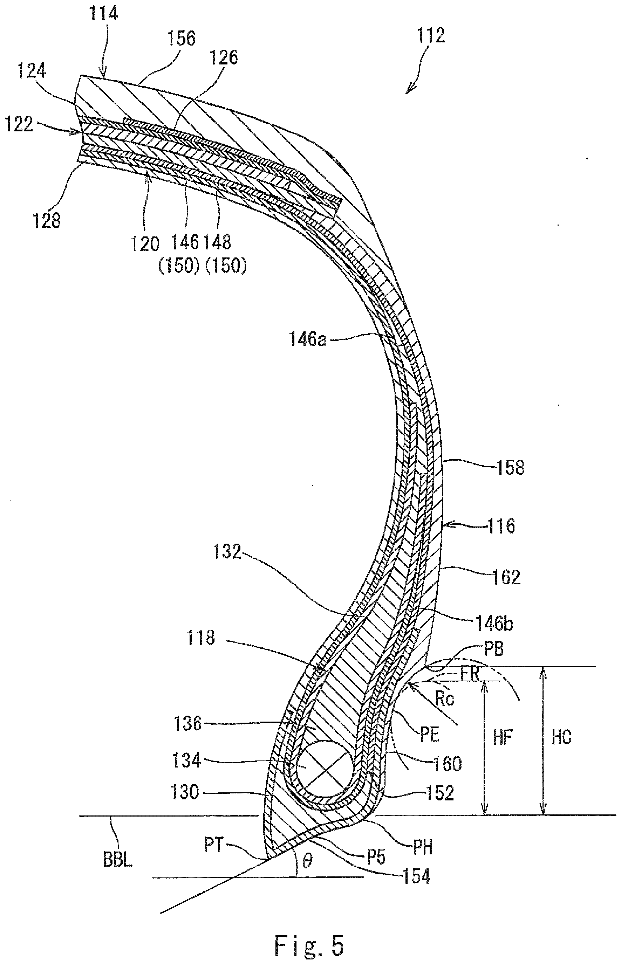

FIG. 5 shows a part of apneumatic tire 112 according to another embodiment of the present invention. FIG. 5 corresponds to FIG. 3 in the above description. FIG. 5 shows a part of a cross-section of the tire 112 along a plane including the axis of rotation of the tire 112. In FIG. 5, the up-down direction represents the radial direction of the tire 112, the left-right direction represents the axial direction of the tire 112, and the direction perpendicular to the surface of the drawing sheet represents the circumferential direction of the tire 112.

The tire 112 includes a tread 114, a pair of sidewalls 116, a pair of beads 118, a carcass 120, a belt 122, a band 124, a pair of edge bands 126, an inner liner 128, a pair of chafers 130, and a pair of fillers 132. The tire 112 is for racing, as with the tire 42 described above.

The tire 112 has almost the same structure as the tire 42 shown in FIG. 1, except for the bead 118 and the carcass 120.

As with the tire 42 shown in FIG. 1, the tire 112 has improved flexibility in the rotational direction while assuring stiffness in the lateral direction. The tire 112 allows a sufficient ground-contact surface to be assured both in a low-speed region where a light load is applied to the tire 112 and in a high-speed region where a heavy load is applied to the tire 112. The tire 112 has excellent cornering performance and acceleration performance. As described in detail below, the tire 112 provides further improved steering stability and wear resistance.

In the tire 112, each bead 118 is disposed axially inward of the corresponding sidewall 116. The bead 118 is disposed in a radially inner side portion of the tire 112. The bead 118 includes a core 134 and an apex 136. The bead 118 has the same specifications as that of the tire 42 except for the core 134. In other words, the apex 136 has the same specifications as the apex 68 of the tire 42 shown in FIG. 1.

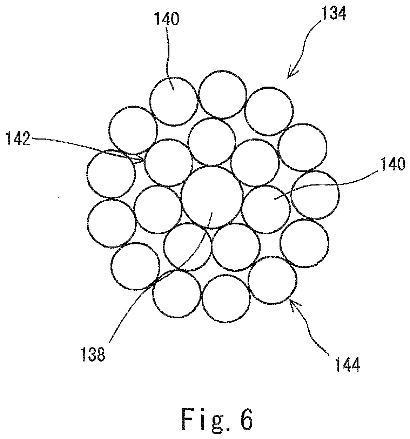

FIG. 6 shows a cross-section of the core 134 of the bead 118 in the tire 112. The core 134 includes a single core wire 138 and a plurality of sheath wires 140. In the core 134 shown in FIG. 6, the number of the sheath wires 140 is 20. The number of the sheath wires 140 included in the core 134 is determined as appropriate according to the specifications of the tire 112. The core wire 138 is preferably formed of a mild-steel wire material or a hard-steel wire material. The sheath wire 140 is preferably formed of a hard-steel wire material.

As shown in FIG. 6, in the core 134, the 20 sheath wires 140 are helically wound around the core wire 138. By this winding, an inner layer 142 including 7 sheath wires 140 and an outer layer 144 including 13 sheath wires 140 are formed in the core 134. The core 134 thus obtained by helically winding the plurality of sheath wires 140 around the core wire 138 is also called a cable bead.

As described above, the core 66 of the tire 42 shown FIG. 1, which is ring-shaped, includes a wound non-stretchable wire. Although not shown, the core 66 has a structure in which, in a cross-section thereof, a plurality of units each including a plurality of wire cross-sections aligned with each other in the axial direction are layered in the radial direction. In the present invention, the core 66 having such a structure is called a single bead.

In the tire 112, the core 134 of the bead 118 is a cable bead. The core 134 has a generally circular cross-section. Therefore, components such as the apex 136, the filler 132, and the carcass 120 that are disposed around the core 134 are more easily rotated around the core 134 by the action of a load applied to the tire 112 than those around a single bead which has an almost rectangular cross-section. The tire 112 is more easily deformed in the lateral direction (in other words, the axial direction) than the tire 42 shown in FIG. 1. The core 134 contributes to increase in the amount of deformation in the lateral direction. In addition, in the tire 112, the core 134 is rotated, following the movement of the components disposed around the core 134, instead of the core 134 itself rotating actively. The behavior of the tire 112 is mild without sudden loss of grip feeling, during running in extreme situations such as racing. The tire 112 provides further improved steering stability. In addition, thanks to the mild behavior in extreme situations, the wear of the tire 112 is effectively reduced. The tire 112 also has improved wear resistance. In other words, from the viewpoint of steering stability and wear resistance, in the tire 112, the core 134 of the bead 118 preferably includes the core wire 138 and the plurality of sheath wires 140, and the sheath wires 140 are preferably helically wound around the core wire 138.

As with the carcass 50 of the tire 42 shown in FIG. 1, in the tire 112, the carcass 120 includes a first carcass ply 146 and a second carcass ply 148, i.e., two carcass plies 150. In the tire 112, the specifications of the carcass plies 150 are the same as the specifications of the carcass plies 70 in the tire 42 shown in FIG. 1. Although not shown, the carcass ply 150 includes multiple carcass cords aligned with each other. The carcass 120 has a radial structure.

In the tire 112, the first carcass ply 146 and the second carcass ply 148 are extended on and between the beads 118 on both sides. The first carcass ply 146 and the second carcass ply 148 are extended along the inside of the tread 114 and the sidewalls 116.

The first carcass ply 146 is turned up around the cores 134 on both sides from the axially inner side toward the axially outer side. By the turning-up, the first carcass ply 146 has a main portion 146a and a pair of turned-up portions 146b formed therein. The first carcass ply 146 includes the main portion 146a and the pair of turned-up portions 146b.

The second carcass ply 148 is not turned up around the cores 134 although the first carcass ply 146 is turned up. In the tire 112, the second carcass ply 148 is not turned up around the cores 134, and ends 150 of the second carcass ply 148 are disposed near the cores 134. In particular, in the tire 112, the ends 152 of the second carcass ply 148 overlap the cores 134 in the axial direction.

In the tire 112, the second carcass ply 148 is not turned up around the cores 134, and therefore, does not inhibit the rotation of the components around the core 134. The carcass 120, which includes the second carcass ply 148, contributes to improvement of the steering stability and wear resistance of the tire 112. In the tire 112, as with the first turned-up portion 72b in the tire 42 shown in FIG. 1, the turned-up portion 146b is structured so as to have a sufficient height, and therefore, the carcass 120 sufficiently contributes to the stiffness of the tire 112, although the second carcass ply 148 does not have a turned-up portion. The carcass 120 also contributes to reduction in the weight of the tire 112. Thus, from the viewpoint of weight reduction, steering stability, and wear resistance, it is preferable that the carcass 120 in the tire 112 includes the first carcass ply 146 and the second carcass ply 148, the first carcass ply 146 is turned up around the cores 134, the second carcass ply 148 is not turned up around the cores 134, and the ends 152 of the second carcass ply 148 is disposed near the cores 134.

In FIG. 5, a reference character PT indicates a toe of the tire 112. A reference character PH indicates a heel of the tire 112. A portion 154, of the outer surface of the tire 112, from the toe PT to the heel PH is called a seat surface. Although not shown, the tire 112 is fitted into a rim. The seat surface 154 of the tire 112 is put on the seat of a rim into which the tire 112 is fitted.

In FIG. 5, an angle of the seat surface 154 of the tire 112 relative to the axial direction, i.e., the tilt angle of the seat surface 154, is represented by an angle θ. A reference character P5 indicates a position, on the seat surface 154, which is 5 mm away from the toe PT. In the present invention, the tilt angle θ of the seat surface 154 is represented on the basis of the tilt of a portion, of the seat surface 154, from the toe PT to the position P5. The tilt angle θ is also called a toe angle.

In the tire 112, the tilt angle θ is preferably not less than 15° and is preferably not greater than 35°. If the tilt angle θ is set so as to be not less than 15°, the bead 118 portion is prevented from being detached from a rim when a force is applied to the bead 118 portion of the tire 112 in the lateral direction. If the angle is set so as to be not greater than 35°, the tire 112 appropriately fits on a rim. In the tire 112, from the viewpoint that the movement of the core 134 is not restrained, and mild behavior is exhibited in extreme situations, the tilt angle θ is more preferably not less than 20° and is more preferably not greater than 30°.

A portion of the outer surface of the tire 112 between a tread surface 156 and the seat surface 154 is called a side surface 158. In the present invention, a portion, of the side surface 158, which is brought into contact with a rim is called a clinch surface 160. A portion positioned radially outward of the clinch surface 160 is called a sidewall surface 162. In FIG. 5, a reference character PB indicates a boundary between the clinch surface 160 and the sidewall surface 162. In the tire 112, the sidewall surface 162 has a shape that projects generally outward in the axial direction, taking deformation into consideration. The clinch surface 160 has a shape that projects generally inward in the axial direction, taking fitting on a rim into consideration. In the tire 112, the outline of the clinch surface 160 is appropriately adjusted.

In FIG. 5, a dotted line FR represents an outline of a flange of a rim (normal rim) into which the tire 112 is fitted. In a state where the tire 112 is fitted into a rim, and is inflated with air so that the internal pressure of the tire 112 is a normal internal pressure, a part of the clinch surface 160 is in contact with the rim. In FIG. 5, a reference character PE indicates a radially outer end of the contact surface. In the present invention, the outer end PE is specified in a state where a load is not applied.

In the tire 112, a portion, of the clinch surface 160, from the boundary PB to the outer end PE, i.e., a radially outer portion of the clinch surface 160, has a shape that is along the flange FR of a rim. As shown in FIG. 5, in a state where the tire 112 is inflated with air so that the internal pressure is adjusted to a normal internal pressure, this portion is not in contact with the flange FR of the rim. A margin for deformation is assured, and therefore, in the tire 112, excessive increase in vertical stiffness is prevented. In the tire 112, good steering stability is maintained.

In the tire 112, an outline of the radially outer portion of the clinch surface 160 is represented by an arc. The outline of the clinch surface 160 includes an arc. In FIG. 5, an arrow Rc represents a radius of the circle which includes the arc. In the tire 112, a position of one end (first end) of the arc coincides with the position of the boundary PB. In other words, the first end of the arc is the boundary PB. A position of the other end (second end) of the arc coincides with a position of the outer end PE. In other words, the second end is the outer end PE. In the tire 112, the second end may be positioned near the outer end PE. The second end may be positioned radially inward of the outer end PE or may be positioned radially outward of the outer end PE. That the second end is positioned near the outer end PE means that a length from the outer end PE to the second end is not greater than 5 mm.

In the tire 112, the radius Rc of the circle that includes the arc representing the outline of the radially outer portion of the clinch surface 160 is preferably not less than 10 mm and is preferably not greater than 25 mm. As a result, sufficient deformation in the lateral direction is assured to such a degree that a driver does not feel that the tire 112 twists. The tire 112 provides better steering stability.

In FIG. 5, a double-headed arrow HC represents a distance in the radial direction from the bead base line to the boundary PB. A double-headed arrow HF represents a distance in the radial direction from the bead base line to a radially outer end of the flange FR of a rim. The distance HF is also called a flange height.

In the tire 112, a ratio of the distance HC to the flange height HF is preferable not less than 110% and is preferably not greater than 120%. As a result, the radially outer portion of the clinch surface 160 is separated from the flange FR of the rim over an appropriate distance. In the tire 112, even when the clinch surface 160 is moved closer to a rim due to a load being applied, the clinch surface 160 is prevented from coming into contact with the flange FR. The tire 112 is inhibited from moving so as to press the rim, and therefore, excessive increase in vertical stiffness is prevented in the tire 112. The tire 112 maintains good steering stability.

### EXAMPLES

Hereinafter, effects of the present invention will become apparent according to examples. However, the present invention should not be restrictively construed based on the description of examples.

### [Experiment 1]

### [Example 1]

A tire shown in FIGS. 1 to 4 was produced. The size of the tire was 225/40R18. The specifications of example 1 were as indicated in Table 1 below.

In example 1, a cord formed of a polyethylene naphthalate (PEN) fiber was employed in the first carcass cord and the second carcass cord. The fineness of the cord was 4500 dtex. A cord formed of an aramid fiber was employed in the filler cord. The fineness of the cord was 4000 dtex.

### [Comparative example 1]

Comparative example 1 is a conventional tire shown in FIG. 7. The size of the tire was 225/40R18. The specifications of comparative example 1 were as indicated in Table 1 below.

In comparative example 1, a cord formed of a polyethylene terephthalate (PET) fiber was employed in the first carcass cord and the second carcass cord. The fineness of the cord was 4500 dtex. A cord formed of an aramid fiber which was the same as the filler cord of example 1 was employed as the filler cord included in each of the first and second fillers.

In comparative example 1, the ratio of the difference between the height, in the radial direction, of the outer portion of the first filler and the height, in the radial direction, of the inner portion of the first filler, relative to the cross-sectional height, was 10%. The ratio corresponds to the ratio (DA/H) in Table 1. The ratio of the height, in the radial direction, of the second filler to the cross-sectional height was 55%. The ratio corresponds to the ratio (HS/H) in Table 1.

### [Comparative example 2]

A tire of comparative example 2, which was similar to that of example 1 except that the angle α1 of the first carcass cord and the angle α2 of the second carcass cord were as indicated in Table 1 below, was obtained.

### [Example 2]

A tire of example 2, which was similar to that of example 1 except that a cord formed of a PET fiber was used as the first carcass cord and the second carcass cord, was obtained. The fineness of the cord formed of the PET fiber was 4500 dtex.

### [Example 3]

A tire of example 3, which was similar to that of example 1 except that the ratio (HU/H) of the height HU, in the radial direction, of the inner portion to the cross-sectional height H, and the ratio (HS/H) of the height HS, in the radial direction, of the outer portion to the cross-sectional height H were as indicated in Table 1 below, was obtained.

### [Example 4]

A tire of example 4, which was similar to that of example 1 except that a cord formed of a PET fiber was used as the filler cord, was obtained. The fineness of the cord formed of the PET fiber was 4500 dtex.

### [Examples 5 and 6]

Tire of examples 5 and 6, which were similar to that of example 1 except that the ratio (H1/H) of the height H1, in the radial direction, of the first turned-up portion to the cross-sectional height H was as indicated in Table 2 below, were obtained.

### [Examples 7 and 8]

Tires of examples 7 and 8, which were similar to that of example 1 except that the angle β of the filler cords in the outer portion was as indicated in Table 2 below, were obtained.

### [Examples 9 to 12 and comparative example 3]

Tires of examples 9 to 12 and comparative example 3, which were similar to that of example 1 except that the ratio (HA/H) of the height HA, in the radial direction, of the apex to the cross-sectional height H, the ratio (HU/H), and the ratio (HS/H) were as indicated in Table 3 below, were obtained.

### [Examples 13 to 17]

Tires of examples 13 to 17, which were similar to that of example 1 except that the ratio (HU/H) and the ratio (HS/H) were changed, and the ratio (DA/H) of the difference DA between the height HA of the apex and the height HU, in the radial direction, of the inner portion relative to the cross-sectional height H was as indicated in Table 4 below, were obtained.

### [Examples 18 to 20]

Tires of examples 18 to 20, which were similar to that of example 1 except that the ratio (HS/H) was changed and the ratio (DS/H) of the distance DS in the radial direction between the end of the inner portion and the end of the outer portion relative to the cross-sectional height H was as indicated in Table 5 below, were obtained.

### [Example 21]

A tire of example 21, which was similar to that of example 1 except that the ratio (HA/H), the ratio (HU/H), and the ratio (HS/H) were changed, and the ratio (DS/H) and the ratio (DA/H) were as indicated in Table 5 below, was obtained.

### [Traction]

Each tire was mounted on a rim (rim size = 18 × 9.0 J), and was inflated with air to an internal pressure of 210 kPa. The vertical stiffness was measured using a stiffness tester in the case where a vertical load of 2.94 kN was applied and in the case where a vertical load of 5.88 kN was applied. The average value of these vertical stiffnesses was obtained. The reciprocal of the average value was calculated. The results are indicated as indexes where the calculation result of comparative example 1 is 100 in Tables 1 to 5 below. The greater the value is, the better the traction performance is.

### [Low-load cornering]

A cornering force was measured using a flat belt-type tire 6-component force measuring device under the following measurement conditions.
Rim used: 18 × 6.0 J
Internal pressure: 210 kPa
Load: 2.94 kN
Speed: 50 km/h
Camber angle: 0°
Slip angle: 4°

Indexes where the cornering force of comparative example 1 is 100 are indicated in Tables 1 to 5 below.

### [High-load cornering]

A cornering force was measured using a flat belt-type tire 6-component force measuring device under the following measurement conditions.
Rim used: 18 × 6.0 J
Internal pressure: 210 kPa
Load: 5.88 kN
Speed: 50 km/h
Camber angle: 0°
Slip angle: 4°

Indexes where the cornering force of comparative example 1 is 100 are indicated in Tables 1 to 5 below.

### [Steering stability]

Each tire was mounted on a rim (rim size = 18 × 6.0 J), and was inflated with air to an internal pressure of 210 kPa. The tire was mounted to a four-wheeled automotive vehicle, for racing, having an engine displacement of 4300 cc. A driver was caused to drive the vehicle on a racing circuit to evaluate steering stability. The results are indicated as indexes in Tables 1 to 5 below. The greater the value is, the better the evaluation is.

### [Table 1]

**Table 1 Evaluation result**

| | Comparative example 1 | Example 1 | Comparative example 2 | Example 2 | Example 3 | Example 4 |
|---|---|---|---|---|---|---|
| Carcass | | | | | | |
| Structure | FIG. 7 | FIG. 1 | FIG. 1 | FIG. 1 | FIG. 1 | FIG. 1 |
| Carcass cord | PET | PEN | PEN | PET | PEN | PEN |
| α1 [°] | -86 | -86 | -79 | -86 | -86 | -86 |
| α2 [°] | 86 | 86 | 79 | 86 | 86 | 86 |
| Ratio (H1/H) [%] | 85 | 30 | 30 | 30 | 30 | 30 |
| Ratio (H2/H) [%] | 5 | 5 | 5 | 5 | 5 | 5 |
| Bead | | | | | | |
| Ratio (HA/H) [%] | 40 | 60 | 60 | 60 | 60 | 60 |
| Filler | | | | | | |
| The number thereof | 2 | 1 | 1 | 1 | 1 | 1 |
| Filler cord | Aramid | Aramid | Aramid | Aramid | Aramid | PET |
| β [°] | 45 | 45 | 45 | 45 | 45 | 45 |
| Ratio (HU/H) [%] | - | 55 | 55 | 55 | 50 | 55 |
| Ratio (HS/H) [%] | - | 50 | 50 | 50 | 55 | 50 |
| Ratio (DS/H) [%] | - | 5 | 5 | 5 | 5 | 5 |
| Ratio (DA/H) [%] | - | 5 | 5 | 5 | 5 | 5 |
| Traction | 100 | 115 | 90 | 113 | 115 | 113 |
| Low-load | 100 | 115 | 90 | 105 | 115 | 105 |
| cornering | | | | | | |
| High-load cornering | 100 | 115 | 118 | 105 | 115 | 105 |
| Steering stability | 100 | 150 | 95 | 125 | 150 | 125 |

### [Table 2]

**Table 2 Evaluation result**

| | Example 5 | Example 6 | Example 7 | Example 8 |
|---|---|---|---|---|
| Carcass | | | | |
| Structure | FIG. 1 | FIG. 1 | FIG. 1 | FIG. 1 |
| Carcass cord | PEN | PEN | PEN | PEN |
| α1 [°] | -86 | -86 | -86 | -86 |
| α2 [°] | 86 | 86 | 86 | 86 |
| Ratio (H1/H) [%] | 35 | 40 | 30 | 30 |
| Ratio (H2/H) [%] | 5 | 5 | 5 | 5 |
| Bead | | | | |
| Ratio (HA/H) [%] | 60 | 60 | 60 | 60 |
| Filler | | | | |
| The number thereof | 1 | 1 | 1 | 1 |
| Filler cord | Aramid | Aramid | Aramid | Aramid |
| β [°] | 45 | 45 | 25 | 65 |
| Ratio (HU/H) [%] | 55 | 55 | 55 | 55 |
| Ratio (HS/H) [%] | 50 | 50 | 50 | 50 |
| Ratio (DS/H) [%] | 5 | 5 | 5 | 5 |
| Ratio (DA/H) [%] | 5 | 5 | 5 | 5 |
| Traction | 115 | 106 | 115 | 115 |
| Low-load cornering | 114 | 113 | 100 | 100 |
| High-load cornering | 116 | 117 | 100 | 100 |
| Steering stability | 150 | 140 | 115 | 115 |

### [Table 3]

**Table 3 Evaluation result**

| | Comparative example 3 | Example 9 | Example 10 | Example 11 | Example 12 |
|---|---|---|---|---|---|
| Carcass | | | | | |
| Structure | FIG. 1 | FIG. 1 | FIG. 1 | FIG. 1 | FIG. 1 |
| Carcass cord | PEN | PEN | PEN | PEN | PEN |
| α1 [°] | -86 | -86 | -86 | -86 | -86 |
| α2 [°] | 86 | 86 | 86 | 86 | 86 |
| Ratio (H1/H) [%] | 30 | 30 | 30 | 30 | 30 |
| Ratio (H2/H) [%] | 5 | 5 | 5 | 5 | 5 |
| Bead | | | | | |
| Ratio (HA/H) [%] | 42 | 45 | 55 | 65 | 68 |
| Filler | | | | | |
| The number thereof | 1 | 1 | 1 | 1 | 1 |
| Filler cord | Aramid | Aramid | Aramid | Aramid | Aramid |
| β [°] | 45 | 45 | 45 | 45 | 45 |
| Ratio (HU/H) [%] | 37 | 40 | 50 | 60 | 63 |
| Ratio (HS/H) [%] | 32 | 35 | 45 | 55 | 58 |
| Ratio (DS/H) [%] | 5 | 5 | 5 | 5 | 5 |
| Ratio (DA/H) | 5 | 5 | 5 | 5 | 5 |
| [%] | | | | | |
| Traction | 118 | 116 | 115 | 108 | 100 |
| Low-load cornering | 90 | 108 | 115 | 110 | 108 |
| High-load cornering | 90 | 108 | 115 | 117 | 118 |
| Steering stability | 95 | 135 | 150 | 140 | 125 |

### [Table 4]

**Table 4 Evaluation result**

| | Example 13 | Example 14 | Example 15 | Example 16 | Example 17 |
|---|---|---|---|---|---|
| Carcass | | | | | |
| Structure | FIG. 1 | FIG. 1 | FIG. 1 | FIG. 1 | FIG. 1 |
| Carcass cord | PEN | PEN | PEN | PEN | PEN |
| α1 [°] | -86 | -86 | -86 | -86 | -86 |
| α2 [°] | 86 | 86 | 86 | 86 | 86 |
| Ratio (H1/H) [%] | 30 | 30 | 30 | 30 | 30 |
| Ratio (H2/H) [%] | 5 | 5 | 5 | 5 | 5 |
| Bead | | | | | |
| Ratio (HA/H) [%] | 60 | 60 | 60 | 60 | 60 |
| Filler | | | | | |
| The number thereof | 1 | 1 | 1 | 1 | 1 |
| Filler cord | Aramid | Aramid | Aramid | Aramid | Aramid |
| β [°] | 45 | 45 | 45 | 45 | 45 |
| Ratio (HU/H) [%] | 70 | 65 | 60 | 57 | 50 |
| Ratio (HS/H) [%] | 65 | 60 | 55 | 52 | 45 |
| Ratio (DS/H) [%] | 5 | 5 | 5 | 5 | 5 |
| Ratio (DA/H) [%] | -10 | -5 | 0 | 3 | 10 |
| Traction | 108 | 110 | 112 | 115 | 115 |
| Low-load cornering | 110 | 112 | 114 | 115 | 108 |
| High-load cornering | 117 | 117 | 116 | 115 | 108 |
| Steering stability | 140 | 143 | 147 | 150 | 135 |

### [Table 5]

**Table 5 Evaluation result**

| | Example 18 | Example 19 | Example 20 | Example 21 |
|---|---|---|---|---|
| Carcass | | | | |
| Structure | FIG. 1 | FIG. 1 | FIG. 1 | FIG. 1 |
| Carcass cord | PEN | PEN | PEN | PEN |
| α1 [°] | -86 | -86 | -86 | -86 |
| α2 [°] | 86 | 86 | 86 | 86 |
| Ratio (H1/H) [%] | 30 | 30 | 30 | 30 |
| Ratio (H2/H) [%] | 5 | 5 | 5 | 5 |
| Bead | | | | |
| Ratio (HA/H) [%] | 60 | 60 | 60 | 45 |
| Filler | | | | |
| The number | 1 | 1 | 1 | 1 |
| thereof | | | | |
| Filler cord | Aramid | Aramid | Aramid | Aramid |
| β [°] | 45 | 45 | 45 | 45 |
| Ratio (HU/H) [%] | 55 | 55 | 55 | 40 |
| Ratio (HS/H) [%] | 52 | 45 | 40 | 30 |
| Ratio (DS/H) [%] | 3 | 10 | 15 | 10 |
| Ratio (DA/H) [%] | 5 | 5 | 5 | 5 |
| Traction | 115 | 115 | 115 | 117 |
| Low-load cornering | 115 | 113 | 108 | 90 |
| High-load cornering | 115 | 113 | 108 | 90 |
| Steering stability | 150 | 145 | 135 | 95 |

As indicated in Tables 1 to 5, evaluation of the tires of the examples is higher than that of the tires of the comparative examples. The evaluation result clearly indicates that the present invention is superior.

### [Experiment 2]

### [Reference example]

A reference example is the tire of example 1 in above-indicated Table 1. To verify an enhanced effect of the present invention, the reference example (example 1) was used as a reference in experiment 2.

The core of the reference example was a single bead. This is indicated by "Single" in the cell for the bead structure in Table 6. The tilt angle θ, i.e., toe angle, of the seat surface was 25°. The radius Rc of the circle including the arc of the radially outer portion of the clinch surface was 8.0 mm. The ratio of the distance HC in the radial direction from the bead base line to the boundary PB, to the flange height HF, was 116%.

### [Example 22]

A tire of example 22, which was similar to that of the reference example except that the carcass had the structure shown in FIG. 5, the bead core was replaced by a cable bead, and the tilt angle θ and the radius Rc were as indicated in Table 6 below, was obtained. Employing a cable bead as the core is indicated by "Cable" in the cell for the bead structure in Table 6.

### [Example 23]

A tire of example 23, which was similar to that of example 22 except that the carcass had the structure shown in FIG. 1 as in the reference example, was obtained.

### [Examples 24 to 27]

Tires of examples 24 to 27, which were similar to that of example 22 except that the tilt angle θ was as indicated in Table 6 below, were obtained.

### [Examples 28 to 31]

Tires of examples 28 to 31, which were similar to that of example 22 except that the radius Rc was as indicated in Table 7 below, were obtained.

### [Examples 32 to 35]

Tires of examples 32 to 35, which were similar to that of example 22 except that the ratio (HC/HF) was as indicated in Table 8 below, were obtained.

### [Steering stability]

Each tire was mounted on a rim (rim size = 18 × 6.0 J), and was inflated with air to an internal pressure of 210 kPa. The tire was mounted to a four-wheeled automotive vehicle, for racing, having an engine displacement of 4300 cc. A driver was caused to drive the vehicle on a racing circuit to evaluate steering stability. The results are indicated as indexes in Tables 6 to 8 below. The greater the value is, the more excellent the steering stability is, which is more preferable.

### [Wear resistance]

Each tire was mounted on a rim (rim size = 18 × 6.0 J), and was inflated with air to an internal pressure of 210 kPa. The tire was mounted to a four-wheeled automotive vehicle, for racing, having an engine displacement of 4300 cc. A driver was caused to drive the vehicle. After the vehicle ran on an ordinary road over 6000 km and on an expressway over 4000 km, the amount of wear in a shoulder portion of the tire was measured. The results are indicated as indexes in Tables 6 to 8 below. The greater the value is, the more excellent the wear resistance is, which is more preferable.

### [Table 6]

**Table 6 Evaluation result**

| | Reference example | Example 23 | Example 24 | Example 25 | Example 22 | Example 26 | Example 27 |
|---|---|---|---|---|---|---|---|
| Carcass | | | | | | | |
| Structure | FIG. 1 | FIG. 1 | FIG. 5 | FIG. 5 | FIG. 5 | FIG. 5 | FIG. 5 |
| Carcass cord | PEN | PEN | PEN | PEN | PEN | PEN | PEN |
| α1 [°] | -86 | -86 | -86 | -86 | -86 | -86 | -86 |
| α2 [°] | 86 | 86 | 86 | 86 | 86 | 86 | 86 |
| Ratio (H1/H) [%] | 30 | 30 | 30 | 30 | 30 | 30 | 30 |
| Ratio (H2/H) [%] | 5 | 5 | - | - | - | - | - |
| Bead | | | | | | | |
| Structure | Single | Cable | Cable | Cable | Cable | Cable | Cable |
| Ratio (HA/H) [%] | 60 | 60 | 60 | 60 | 60 | 60 | 60 |
| Filler | | | | | | | |
| The number thereof | 1 | 1 | 1 | 1 | 1 | 1 | 1 |
| Filler | Aramid | Aramid | Aramid | Aramid | Aramid | Aramid | Aramid |
| cord | | | | | | | |
| β [°] | 45 | 45 | 45 | 45 | 45 | 45 | 45 |
| Ratio (HU/H) [%] | 55 | 55 | 55 | 55 | 55 | 55 | 55 |
| Ratio (HS/H) [%] | 50 | 50 | 50 | 50 | 50 | 50 | 50 |
| Ratio (DS/H) [%] | 5 | 5 | 5 | 5 | 5 | 5 | 5 |
| Ratio (DA/H) [%] | 5 | 5 | 5 | 5 | 5 | 5 | 5 |
| Angle θ [°] | 25 | 27 | 15 | 20 | 27 | 30 | 35 |
| Radius Rc [mm] | 8.0 | 19.6 | 19.6 | 19.6 | 19.6 | 19.6 | 19.6 |
| Ratio (HC/HF) [%] | 116 | 116 | 116 | 116 | 116 | 116 | 116 |
| Steering stability | 150 | 153 | 143 | 155 | 158 | 156 | 153 |
| Wear resistance | 3.0 | 3.2 | 3.0 | 3.2 | 3.4 | 3.0 | 2.8 |

### [Table 7]

**Table 7 Evaluation result**

| | Example 28 | Example 29 | Example 30 | Example 31 |
|---|---|---|---|---|
| Carcass | | | | |
| Structure | FIG. 5 | FIG. 5 | FIG. 5 | FIG. 5 |
| Carcass cord | PEN | PEN | PEN | PEN |
| α1 [°] | -86 | -86 | -86 | -86 |
| α2 [°] | 86 | 86 | 86 | 86 |
| Ratio (H1/H) [%] | 30 | 30 | 30 | 30 |
| Ratio (H2/H) [%] | - | - | - | - |
| Bead | | | | |
| Structure | Cable | Cable | Cable | Cable |
| Ratio (HA/H) [%] | 60 | 60 | 60 | 60 |
| Filler | | | | |
| The number thereof | 1 | 1 | 1 | 1 |
| Filler cord | Aramid | Aramid | Aramid | Aramid |
| β [°] | 45 | 45 | 45 | 45 |
| Ratio (HU/H) [%] | 55 | 55 | 55 | 55 |
| Ratio (HS/H) [%] | 50 | 50 | 50 | 50 |
| Ratio (DS/H) [%] | 5 | 5 | 5 | 5 |
| Ratio (DA/H) [%] | 5 | 5 | 5 | 5 |
| Angle θ [°] | 27 | 27 | 27 | 27 |
| Radius Rc | 10.0 | 15.0 | 25.0 | 30.0 |
| [mm] | | | | |
| Ratio (HC/HF) [%] | 116 | 116 | 116 | 116 |
| Steering stability | 143 | 150 | 153 | 147 |
| Wear resistance | 3.0 | 3.2 | 3.2 | 3.0 |

### [Table 8]

**Table 8 Evaluation result**

| | Example 32 | Example 33 | Example 34 | Example 35 |
|---|---|---|---|---|
| Carcass | | | | |
| Structure | FIG. 5 | FIG. 5 | FIG. 5 | FIG. 5 |
| Carcass cord | PEN | PEN | PEN | PEN |
| α1 [°] | -86 | -86 | -86 | -86 |
| α2 [°] | 86 | 86 | 86 | 86 |
| Ratio (H1/H) [%] | 30 | 30 | 30 | 30 |
| Ratio (H2/H) [%] | - | - | - | - |
| Bead | | | | |
| Structure | Cable | Cable | Cable | Cable |
| Ratio (HA/H) [%] | 60 | 60 | 60 | 60 |
| Filler | | | | |
| The number thereof | 1 | 1 | 1 | 1 |
| Filler cord | Aramid | Aramid | Aramid | Aramid |
| β [°] | 45 | 45 | 45 | 45 |
| Ratio (HU/H) [%] | 55 | 55 | 55 | 55 |
| Ratio (HS/H) [%] | 50 | 50 | 50 | 50 |
| Ratio (DS/H) [%] | 5 | 5 | 5 | 5 |
| Ratio (DA/H) [%] | 5 | 5 | 5 | 5 |
| Angle θ [°] | 27 | 27 | 27 | 27 |
| Radius Rc [mm] | 19.6 | 19.6 | 19.6 | 19.6 |
| Ratio (HC/HF) [%] | 105 | 110 | 120 | 125 |
| Steering stability | 143 | 150 | 153 | 147 |
| Wear resistance | 3.0 | 3.2 | 3.2 | 3.0 |

As indicated in Tables 6 to 8, it was confirmed that, in the tires of the examples, a cable bead was employed as the core, and the end of the second carcass ply was positioned near the core without turning up the second carcass ply around the core, and the like, so that the steering stability and the wear resistance were further improved. The evaluation result also clearly indicates that the present invention is superior.

### INDUSTRIAL APPLICABILITY

The above-described techniques for achieving rapid cornering and outstanding acceleration are applicable to various types of tires.

### DESCRIPTION OF THE REFERENCE CHARACTERS

2, 42, 112···tire
4, 50, 120···carcass
6···first ply
8···second ply
10, 48, 118···bead
12···turned-up portion of first ply 6
14···main portion of first ply 6
16···main portion of second ply 8
18···end of turned-up portion 12
20, 52, 122···belt
22···first filler
24···second filler
26···inner portion
28···outer portion
30···inner end of second filler 24
32···outer end of second filler 24
34, 44, 114···tread
46, 116···-sidewall
62, 132···-filler
64, 156···tread surface
66, 134···core
68, 136···apex
70, 150···carcass ply
72, 146···first carcass ply
72a···first main portion
72b···first turned-up portion
74, 148···second carcass ply
74a···second main portion
74b···second turned-up portion
76···end of second turned-up portion 74b
78···end of first turned-up portion 72b
80···first carcass cord
84···second carcass cord
92···inner portion
94···outer portion
96···end of inner portion 92
98···end of outer portion 94
100···filler cord
106···outer end of apex 68
108···end of belt 52
138···core wire
140···sheath wire
146a···main portion
146b···turned-up portion
152···end of second carcass ply 148
154···seat surface
158···side surface
160···clinch surface
162···sidewall surface

## Claims

1. A pneumatic tire (2, 42, 112) comprising:
a tread (34, 44, 114);
a pair of sidewalls (46, 116);
a pair of beads (10, 48, 118);
a carcass (4, 50, 120);
a belt (20, 52, 122); and
a pair of fillers (22, 24), wherein
the sidewalls (46, 116) extend from ends, respectively, of the tread (34, 44, 114) almost inward in a radial direction,
the beads (10, 48, 118) are disposed axially inward of the sidewalls (46, 116), respectively, the beads (10, 48, 118) include cores (66, 134) and apexes (68, 136), and each apex (68, 136) extends from a corresponding one of the cores (66, 134) outward in the radial direction,
the carcass (4, 50, 120) is extended on and between one of the beads (10, 48, 118) and the other of the beads (10, 48, 118), along inside of the tread (34, 44, 114) and the sidewalls (46, 116), the carcass (4, 50, 120) includes a carcass ply (70, 72, 74, 146, 148, 150), the carcass ply (70, 72, 74, 146, 148, 150) includes a main portion (72a, 74a, 146a) and a pair of turned-up portions (72b, 74b, 146b), the main portion (72a, 74a, 146a) is extended on and between one of the cores (66, 134) and the other of the cores (66, 134), and each of the turned-up portions (72b, 74b, 146b) extends from a portion near a corresponding one of the cores (66, 134) outward in the radial direction,
the belt (20, 52, 122) and the carcass (4, 50, 120) are layered radially inward of the tread (34, 44, 114),
the fillers (22, 24) are disposed between the carcass (4, 50, 120) and the beads (10, 48, 118), respectively, the fillers (22, 24) include inner portions (26, 92) and outer portions (28, 94), the inner portions (26, 92) are disposed axially inward of the beads (10, 48, 118), respectively, and extend from near the cores (66, 134), respectively, outward in the radial direction, and the outer portions (28, 94) are disposed axially outward of the beads (10, 48, 118), respectively, and extend from near the cores (66, 134), respectively, outward in the radial direction,
the carcass ply (70, 72, 74, 146, 148, 150) includes multiple carcass cords (80, 84) aligned with each other, and an absolute value of an angle (α1, α2) of each of the carcass cords (80, 84) relative to an equator plane is not less than 80° and not greater than 90°,
ends of the inner portions (96) and ends of the outer portions (98) are disposed between ends of the belt (20, 52, 122) and ends of the turned-up portions (72b, 74b, 146b), respectively, in the radial direction,
a ratio of a height (HA), in the radial direction, of each apex (68, 136) to a cross-sectional height (H) of the tire (2, 42, 112) is not less than 45%,
a ratio of a height (HU), in the radial direction, of each inner portion (26, 92) to the cross-sectional height (H) is not less than 35%, and
a ratio of a height (HS), in the radial direction, of each outer portion (28, 94) to the cross-sectional height (H) is not less than 35%, **characterized in that**
the ends of the outer portions (98) are disposed radially outward of the ends of the inner portions (96), respectively, and a ratio of a difference between the height (HA), in the radial direction, of each apex (68, 136) and the height (HS), in the radial direction, of a corresponding one of the outer portions (28, 94), to the cross-sectional height (H), is not less than -5% and not greater than 5%.

2. The pneumatic tire (2, 42, 112) according to claim 1, wherein
the ratio of the height (HA), in the radial direction, of each apex (68, 136) to the cross-sectional height (H) is not greater than 65%.

3. The pneumatic tire (2, 42, 112) according to claim 1 or 2, wherein
the carcass cords (80, 84) are formed of a polyethylene naphthalate fiber.

4. The pneumatic tire (2, 42, 112) according to claim 3, wherein
the carcass cords (80, 84) have a fineness of not less than 3000 dtex and not greater than 6000 dtex.

5. The pneumatic tire (2, 42, 112) according to any one of claims 1 to 4, wherein
each of the fillers (22, 24) includes multiple filler cords (100) aligned with each other, and
each of the filler cords (100) is tilted relative to the radial direction, and an absolute value of an angle (β) of the tilt is not less than 30° and not greater than 60°.

6. The pneumatic tire (2, 42, 112) according to claim 5, wherein
the absolute value of the angle (β) of the tilt is 45°.

7. The pneumatic tire (2, 42, 112) according to claim 5 or 6, wherein
the filler cords (100) are formed of an aramid fiber.

8. The pneumatic tire (2, 42, 112) according to claim 7, wherein
the filler cords (100) have a fineness of not less than 2000 dtex and not greater than 6000 dtex.

9. The pneumatic tire (2, 42, 112) according to any one of claims 1 to 8, wherein
a ratio of a distance in the radial direction from the end of each inner portion (96) to the end of a corresponding one of the outer portions (98) to the cross-sectional height (H) is not less than 3% and not greater than 10%.

10. The pneumatic tire (2, 42, 112) according to any one of claims 1 to 9, wherein
a ratio of a height (H1, H2), in the radial direction, of each turned-up portion (72b, 74b, 146b) to the cross-sectional height (H) is not greater than 35%.

11. The pneumatic tire according to any one of claims 1 to 10, wherein
each core includes a core wire and a plurality of sheath wires, and the sheath wires are helically wound around the core wire.

12. The pneumatic tire according to claim 11, wherein
the carcass includes two carcass plies as the carcass ply, a first carcass ply which is one of the carcass plies is turned up around the cores, and a second carcass ply which is the other of the carcass plies is not turned up around the cores, and ends of the second carcass ply are disposed near the respective cores.

## Patentansprüche

1. Luftreifen (2, 42, 112), umfassend:
eine Lauffläche (34, 44, 114);
ein Paar Seitenwände (46, 116);
ein Paar Wülste (10, 48, 118);
eine Karkasse (4, 50, 120);
einen Gürtel (20, 52, 122); und
ein Paar Fülllagen (22, 24), wobei
die Seitenwände (46, 116) sich von jeweiligen Enden der Lauffläche (34, 44, 114) in einer radialen Richtung nahezu nach innen erstrecken,
die Wülste (10, 48, 118) jeweils axial innen von den Seitenwänden (46, 116) angeordnet sind, die Wülste (10, 48, 118) Kerne (66, 134) und Kernreiter (68, 136) umfassen und jeder Kernreiter (68, 136) sich von einem entsprechenden der Kerne (66, 134) in der radialen Richtung nach außen erstreckt,
die Karkasse (4, 50, 120) sich auf und zwischen einem der Wülste (10, 48, 118) und dem anderen der Wülste (10, 48, 118), entlang der Innenseite der Lauffläche (34, 44, 114) und der Seitenwände (46, 116) erstreckt, die Karkasse (4, 50, 120) eine Karkasslage (70, 72, 74, 146, 148, 150) umfasst, die Karkasslage (70, 72, 74, 146, 148, 150) einen Hauptabschnitt (72a, 74a, 146a) und ein Paar Umschlagabschnitte (72b, 74b, 146b) umfasst, der Hauptabschnitt (72a, 74a, 146a) sich auf und zwischen einem der Kerne (66, 134) und dem anderen der Kerne (66, 134) erstreckt, und jeder der Umschlagabschnitte (72b, 74b, 146b) sich von einem Abschnitt in der Nähe eines entsprechenden der Kerne (66, 134) in der radialen Richtung nach außen erstreckt,
der Gürtel (20, 52, 122) und die Karkasse (4, 50, 120) radial innen von der Lauffläche (34, 44, 114) geschichtet sind,
die Fülllagen (22, 24) jeweils zwischen der Karkasse (4, 50, 120) und den Wülsten (10, 48, 118) angeordnet sind, die Fülllagen (22, 24) innere Abschnitte (26, 92) und äußere Abschnitte (28, 94) umfassen, die inneren Abschnitte (26, 92) jeweils axial innen von den Wülsten (10, 48, 118) angeordnet sind und sich jeweils von der Nähe der Kerne (66, 134) in der radialen Richtung nach außen erstrecken, und die äußeren Abschnitte (28, 94) jeweils axial außen von den Wülsten (10, 48, 118) angeordnet sind und sich jeweils von der Nähe der Kerne (66, 134) in der radialen Richtung nach außen erstrecken,
die Karkasslage (70, 72, 74, 146, 148, 150) mehrere miteinander ausgerichtete Karkasskorde (80, 84) umfasst, und ein Absolutwert eines Winkels (α1, α2) eines jeden der Karkasskorde (80, 84) relativ zu einer Äquatorebene nicht kleiner als 80° und nicht größer als 90° ist,
Enden der inneren Abschnitte (96) und Enden der äußeren Abschnitte (98) jeweils zwischen Enden des Gürtels (20, 52, 122) bzw. Enden der Umschlagabschnitte (72b, 74b, 146b) in der radialen Richtung angeordnet sind,
ein Verhältnis einer Höhe (HA) jedes Kernreiters (68, 136) in der radialen Richtung zur Querschnittshöhe (H) des Reifens (2, 42, 112) nicht weniger als 45 % beträgt,
ein Verhältnis einer Höhe (HU) in der radialen Richtung jedes inneren Abschnitts (26, 92) zur Querschnittshöhe (H) nicht weniger als 35 % beträgt, und
ein Verhältnis zwischen einer Höhe (HS) in der radialen Richtung jedes äußeren Abschnitts (28, 94) und der Querschnittshöhe (H) nicht weniger als 35 % beträgt,
**dadurch gekennzeichnet, dass**
die Enden der äußeren Abschnitte (98) jeweils radial außen von den Enden der inneren Abschnitte (96) angeordnet sind, und ein Verhältnis einer Differenz zwischen der Höhe (HA) in der radialen Richtung jedes Kernreiters (68, 136) und der Höhe (HS) in der radialen Richtung eines entsprechenden der äußeren Abschnitte (28, 94) zur Querschnittshöhe (H) nicht weniger als -5 % und nicht mehr als 5 % beträgt.

2. Luftreifen (2, 42, 112) nach Anspruch 1, wobei das Verhältnis der Höhe (HA) in der radialen Richtung jedes Kernreiters (68, 136) zur Querschnittshöhe (H) nicht größer als 65 % ist.

3. Luftreifen (2, 42, 112) nach Anspruch 1 oder 2, wobei die Karkasskorde (80, 84) aus einer Polyethylennaphthalatfaser gebildet sind.

4. Luftreifen (2, 42, 112) nach Anspruch 3, wobei die Karkasskorde (80, 84) eine Feinheit von nicht weniger als 3000 dtex und nicht mehr als 6000 dtex aufweisen.

5. Luftreifen (2, 42, 112) nach einem der Ansprüche 1 bis 4, wobei
jede der Fülllagen (22, 24) mehrere miteinander ausgerichtete Fülllagenkorde (100) umfasst, und
jeder der Fülllagenkorde (100) relativ zu der radialen Richtung geneigt ist, und ein Absolutwert eines Neigungswinkels (β) nicht kleiner als 30° und nicht größer als 60° ist.

6. Luftreifen (2, 42, 112) nach Anspruch 5, wobei der Absolutwert des Neigungswinkels (β) 45° beträgt.

7. Luftreifen (2, 42, 112) nach Anspruch 5 oder 6, wobei die Fülllagenkorde (100) aus einer Aramidfaser gebildet sind.

8. Luftreifen (2, 42, 112) nach Anspruch 7, wobei die Fülllagenkorde (100) eine Feinheit von nicht weniger als 2000 dtex und nicht mehr als 6000 dtex aufweisen.

9. Luftreifen (2, 42, 112) nach einem der Ansprüche 1 bis 8, wobei ein Verhältnis in der radialen Richtung eines Abstands vom Ende jedes inneren Abschnitts (96) zum Ende eines entsprechenden der äußeren Abschnitte (98) zur Querschnittshöhe (H) nicht weniger als 3% und nicht mehr als 10% beträgt.

10. Luftreifen (2, 42, 112) nach einem der Ansprüche 1 bis 9, wobei ein Verhältnis einer Höhe (H1, H2) in der radialen Richtung jedes Umschlagabschnitts (72b, 74b, 146b) zur Querschnittshöhe (H) nicht größer als 35 % ist.

11. Luftreifen nach einem der Ansprüche 1 bis 10, wobei jeder Kern einen Kerndraht und eine Vielzahl von Manteldrähten enthält und die Manteldrähte wendeiförmig um den Kerndraht gewickelt sind.

12. Luftreifen nach Anspruch 11, wobei die Karkasse zwei Karkasslagen als die Karkasslage umfasst, wobei eine erste Karkasslage, die eine der Karkasslagen ist, um die Kerne herum umgeschlagen ist, und eine zweite Karkasslage, die die andere der Karkasslagen ist, nicht um die Kerne herum umgeschlagen ist, und Enden der zweiten Karkasslage in der Nähe der jeweiligen Kerne angeordnet sind.

## Revendications

1. Bandage pneumatique (2, 42, 112) comprenant :
une bande de roulement (34, 44, 114) ;
une paire de parois latérales (46, 116) ;
une paire de talons (10, 48, 118) ;
une carcasse (4, 50, 120) ;
une ceinture (20, 52, 122) ; et
une paire d'agents de charge (22, 24), dans lequel
les parois latérales (46, 116) s'étendent depuis des extrémités, respectivement, de la bande de roulement (34, 44, 114) pratiquement vers l'intérieur dans une direction radiale,
les talons (10, 48, 118) sont disposés axialement à l'intérieur des parois latérales (46, 116), respectivement, les talons (10, 48, 118) incluent des âmes (66, 134) et des sommets (68, 136), et chaque sommet (68, 136) s'étend depuis une des âmes (66, 134) correspondante vers l'extérieur dans la direction radiale,
la carcasse (4, 50, 120) est étendue sur et entre l'un des talons (10, 48, 118) et l'autre des talons (10, 48, 118), le long de l'intérieur de la bande de roulement (34, 44, 118) et des parois latérales (46, 116), la carcasse (4, 50, 120) inclut une nappe de carcasse (70, 72, 74, 146, 148, 150), la nappe de carcasse (70, 72, 74, 146, 148, 150) inclut une portion principale (72a, 74a, 146a) et une paire de portions retroussées (72b, 74b, 146b), la portion principale (72a, 74a, 146a) est étendue sur et entre l'une des âmes (66, 134) et l'autre des âmes (66,134), et chacune des portions retroussées (72b, 74b, 146b) s'étend depuis une portion proche d'une des âmes (66, 134) correspondante vers l'extérieur dans la direction radiale,
la ceinture (20, 52, 122) et la carcasse (4, 50, 120) sont disposées en couches radialement à l'intérieur de la bande de roulement (34, 44, 114), les agents de charge (22, 24) sont disposés entre la carcasse (4, 50, 120) et les talons (10, 48, 118), respectivement, les agents de charge (22, 24) incluent des portions intérieures (26, 92) et des portions extérieures (28, 94), les portions intérieures (26, 92) sont disposées axialement à l'intérieur des talons (10, 48, 118), respectivement, et s'étendent depuis une proximité des âmes (66, 134) respectivement, vers l'extérieur dans la direction radiale, et les portions extérieures (28, 94) sont disposées axialement à l'extérieur des talons (10, 48, 118), respectivement, et s'étendent depuis une proximité des âmes (66, 134), respectivement, vers l'extérieur dans la direction radiale,
la nappe de carcasse (70, 72, 74, 146, 148, 150) inclut de multiples câblés de carcasse (80, 84) alignés les uns avec les autres, et une valeur absolue d'un angle (α1, α2) de chacun des câblés de carcasse (80, 84) relativement à un plan d'équateur n'est pas inférieure à 80° et n'est pas supérieure à 90°, des extrémités des portions intérieures (96) et des extrémités des portions extérieures (98) sont disposées entre des extrémités de la ceinture (20, 52, 122) et des extrémités des portions retroussées (72b, 74b, 146b), respectivement, dans la direction radiale,
un rapport d'une hauteur (HA), dans la direction radiale, de chaque sommet (68, 136) sur une hauteur de section transversale (H) du pneumatique (2, 42, 112) n'est pas inférieur à 45 %,
un rapport d'une hauteur (HU), dans la direction radiale, de chaque portion intérieure (26, 92) sur la hauteur de section transversale (H) n'est pas inférieur à 35 %, et
un rapport d'une hauteur (HS), dans la direction radiale, de chaque portion extérieure (28, 94) sur la hauteur de section transversale (H) n'est pas inférieur à 35 %,
**caractérisé en ce que**
les extrémités des portions extérieures (98) sont disposées radialement à l'extérieur des extrémités des portions intérieures (96), respectivement, et un rapport d'une différence entre la hauteur (HA), dans la direction radiale, de chaque sommet (68, 136) et la hauteur (HS), dans la direction radiale, d'une des portions extérieures (28, 94) correspondante sur la hauteur de section transversale (H) n'est pas inférieur à -5 % et n'est pas supérieur à 5 %.

2. Bandage pneumatique (2, 42, 112) selon la revendication 1, dans lequel le rapport de la hauteur (HA), dans la direction radiale, de chaque sommet (68, 136) sur la hauteur de section transversale (H) n'est pas supérieur à 65 %.

3. Bandage pneumatique (2, 42, 112) selon la revendication 1 ou 2, dans lequel
les câblés de carcasse (80, 84) sont formés d'une fibre naphtalate polyéthylène.

4. Bandage pneumatique (2, 42, 112) selon la revendication 3, dans lequel les câblés de carcasse (80, 84) ont une finesse qui n'est pas inférieure à 3 000 dtex et qui n'est pas supérieure à 6 000 dtex.

5. Bandage pneumatique (2, 42, 112) selon l'une quelconque des revendications 1 à 4, dans lequel
chacun des agents de charge (22, 24) inclut de multiples câblés d'agent de charge (100) alignés les uns avec les autres, et
chacun des câblés d'agent de charge (100) est incliné relativement à la direction radiale, et une valeur absolue d'un angle (β) de l'inclinaison n'est pas inférieure à 30° et n'est pas supérieure à 60°.

6. Bandage pneumatique (2, 42, 112) selon la revendication 5, dans lequel la valeur absolue de l'angle (β) de l'inclinaison est 45°.

7. Bandage pneumatique (2, 42, 112) selon la revendication 5 ou 6, dans lequel
les câblés d'agent de charge (100) sont formés d'une fibre aramide.

8. Bandage pneumatique (2, 42, 112) selon la revendication 7, dans lequel les câblés d'agent de charge (100) ont une finesse qui n'est pas inférieure à 2 000 dtex et qui n'est pas supérieure à 6 000 dtex.

9. Bandage pneumatique (2, 42, 112) selon l'une quelconque des revendications 1 à 8, dans lequel
un rapport d'une distance dans la direction radiale depuis l'extrémité de chaque portion intérieure (96) jusqu'à l'extrémité d'une des portions extérieures (98) correspondante sur la hauteur de section transversale (H) n'est pas inférieur à 3 % et n'est pas supérieur à 10 %.

10. Bandage pneumatique (2, 42, 112) selon l'une quelconque des revendications 1 à 9, dans lequel
un rapport d'une hauteur (H1, H2), dans la direction radiale, de chaque portion retroussée (72b, 74b, 146b) sur la hauteur de section transversale (H) n'est pas supérieur à 35 %.

11. Bandage pneumatique selon l'une quelconque des revendications 1 à 10, dans lequel
chaque âme inclut un fil d'âme et une pluralité de fils à gaine, et les fils à gaine sont enroulés de manière hélicoïdale autour du fil d'âme.

12. Bandage pneumatique selon la revendication 11, dans lequel la carcasse inclut deux nappes de carcasse à titre de nappe de carcasse, une première nappe de carcasse qui est l'une des nappes de carcasse est retroussée autour des âmes, et une seconde nappe de carcasse qui est l'autre des nappes de carcasse n'est pas retroussée autour des âmes, et des extrémités de la seconde nappe de carcasse sont disposées près des âmes respectives.
